# EUROPÄISCHE PATENTSCHRIFT

(11) **EP 3 720 246 B1**
(45) Veröffentlichungstag und Bekanntmachung des Hinweises auf die Patenterteilung: **05.11.2025**
(21) Anmeldenummer: 20162409.5
(22) Anmeldetag: 11.03.2020
(51) Int. Cl.: H05B 6/14, H05B 6/40, B23P 11/02

(54) **INDUKTIONSHEIZVORRICHTUNG, VERFAHREN MIT EINER INDUKTIONSHEIZVORRICHTUNG, EIN- UND/ODER AUSSCHRUMPFSPANNSTATION UND VERFAHREN MIT EINER EIN- UND/ODER AUSSCHRUMPFSPANNSTATION**
INDUCTION HEATING DEVICE, METHOD WITH AN INDUCTION HEATING DEVICE, SHRINK GRIP AND/OR RELEASE STATION AND METHOD WITH SAME
DISPOSITIF DE CHAUFFAGE PAR INDUCTION, PROCÉDÉ COMPRENANT UN DISPOSITIF DE CHAUFFAGE PAR INDUCTION, STATION DE SERRAGE ET/OU DE DESSERRAGE ET PROCÉDÉ COMPRENANT UNE STATION DE SERRAGE ET/OU DE DESSERRAGE

(30) Priorität: 02.04.2019 DE 102019108605
(43) Veröffentlichungstag der Anmeldung: 07.10.2020
(73) Patentinhaber: E. Zoller GmbH & Co. KG Einstell- und Messgeräte, 74385 Pleidelsheim (DE)
(72) Erfinder: Zoller, Alexander, 74385 Pleidelsheim (DE); Pfau, Christian, 74379 Ingersheim (DE)
(74) Vertreter: Daub, Thomas

(56) Entgegenhaltungen:
- WO-A1-2019/038190
- DE-A1- 102015 016 831
- DE-U1- 202007 000 870

## Beschreibung

### Stand der Technik

Die Erfindung betrifft eine Induktionsheizvorrichtung nach dem Oberbegriff des Anspruchs 1, Verfahren mit der Induktionsheizvorrichtung nach dem Anspruch 7, eine Ein- und/oder Ausschrumpfspannstation nach dem Oberbegriff des Anspruchs 8, ein Verfahren mit einer Ein- und/oder Ausschrumpfspannstation nach dem Oberbegriff des Anspruchs 16 und Verfahren zum Ein- oder Ausschrumpfen von Werkzeugen nach den Ansprüchen 17 und 18.

Aus den Dokumenten DE 10 2015 016831 A1, DE 20 2007 000 870 U1 und WO 2019/038190 A1 sind bereits Induktionsheizvorrichtungen für ein Ein- und/oder Ausschrumpfen von Werkzeugen in und/oder aus Werkzeugaufnahmen mit einer zumindest eine Induktionsspule umfassenden Induktionsheizeinheit, welche dazu vorgesehen ist, zumindest einen Teil der Werkzeugaufnahme bei einem Ein- und/oder Ausschrumpfvorgang durch Erhitzen aufzuweiten und mit zumindest einer Abschirmeinheit, welche zumindest dazu vorgesehen ist, ein durch die Induktionsheizeinheit erzeugtes Induktionsmagnetfeld zumindest im Wesentlichen zumindest in einer Axialrichtung der Induktionsspule abzuschirmen vorgeschlagen worden. Weder bildet eine der Abschirmeinheiten aus diesen Dokumenten eine Werkzeuggreifereinheit aus noch offenbart eines dieser Dokumente eine Werkzeuggreifereinheit, die während eines gesamten
Einschrumpfvorgangs und/oder während eines gesamten Ausschrumpfvorgangs ausschließlich entlang einer gemeinsamen Axialrichtung der Werkzeuggreifereinheit und einer Halteeinheit zur Halterung der Werkzeugaufnahme während dem Einschrumpfvorgang und/oder während dem gesamten Ausschrumpfvorgang, verfahren werden kann.

Die Aufgabe der Erfindung besteht insbesondere darin, eine gattungsgemäße Vorrichtung mit vorteilhaften Eigenschaften hinsichtlich eines Schrumpfspannprozesses für Werkzeuge bereitzustellen. Die Aufgabe wird erfindungsgemäß durch die Merkmale der Patentansprüche 1, 7, 8, 16, 17, 18 gelöst, während vorteilhafte Ausgestaltungen und Weiterbildungen der Erfindung den Unteransprüchen entnommen werden können.

### Vorteile der Erfindung

Die Erfindung geht aus von einer Induktionsheizvorrichtung für ein Ein- und/oder Ausschrumpfen von Werkzeugen in und/oder aus Werkzeugaufnahmen, insbesondere von einer Induktionsheizeinheit einer Ein- und/oder Ausschrumpfspannstation für Werkzeuge, mit einer zumindest eine Induktionsspule umfassenden Induktionsheizeinheit, welche dazu vorgesehen ist, zumindest einen Teil der Werkzeugaufnahme bei einem Ein- und/oder Ausschrumpfvorgang durch Erhitzen aufzuweiten und mit zumindest einer Abschirmeinheit, welche zumindest dazu vorgesehen ist, ein durch die Induktionsheizeinheit erzeugtes Induktionsmagnetfeld zumindest im Wesentlichen zumindest in einer Axialrichtung der Induktionsspule abzuschirmen.

Die Induktionsheizeinheit und die Abschirmeinhei bilden betriebsmäßig voneinander entkoppelbare und somit zumindest entlang der Axialrichtung relativ zueinander bewegbare Baueinheiten aus. Dadurch kann vorteilhaft ein Schrumpfspannprozess optimiert werden. Vorteilhaft kann eine Position der Abschirmeinheit relativ zu der Induktionsspule und/oder relativ zu einem einzuschrumpfenden Werkzeug eingestellt werden, wodurch insbesondere eine Anpassung einer Konfiguration der Induktionsheizvorrichtung an ein ein- oder auszuschrumpfendes Werkzeug und/oder an eine Werkzeugaufnahme angepasst werden kann. Vorteilhaft kann ein Bereich, in dem ein Induktionsmagnetfeld der Induktionsspule abgeschirmt werden soll, variabel festgelegt werden.

Unter einer "Werkzeugaufnahme" soll insbesondere ein Bauteil verstanden werden, welches zu einer Aufnahme eines Werkzeugs und einer Verbindung des Werkzeugs mit einer Maschine vorgesehen ist. Insbesondere ist die Werkzeugaufnahme als eine Schnittstelle zwischen Werkzeug und Maschine ausgebildet. Vorzugsweise ist die Werkzeugaufnahme als ein Werkzeugfutter, insbesondere ein Schrumpffutter, ausgebildet. Das Werkzeug ist insbesondere als ein Schaftwerkzeug, vorzugsweise als ein Rotations-Schaftwerkzeug, beispielsweise ein Bohrer, ein Fräser, ein Profilwerkzeug und/oder eine Reibahle ausgebildet. Unter einem "Einschrumpfen von Werkzeugen in und/oder aus Werkzeugaufnahmen" soll insbesondere ein Einspannen von Werkzeugen in Werkzeugaufnahmen verstanden werden, bei dem eine Werkzeugaufnahmeöffnung der Werkzeugaufnahme zunächst thermisch aufgeweitet wird, dann ein Werkzeug in die Werkzeugaufnahmeöffnung eingeführt wird und wobei das Werkzeug schließlich nach einem Abkühlen der Werkzeugaufnahme durch einen Kraftschluss, insbesondere einen Reibschluss, in der Werkzeugaufnahme befestigt ist. Unter einem "Ausschrumpfen von Werkzeugen in und/oder aus Werkzeugaufnahmen" soll insbesondere ein Lösen von mittels einem Kraftschluss, insbesondere einem Reibschluss, in Werkzeugaufnahmen befestigten Werkzeugen verstanden werden, bei dem die Werkzeugaufnahmeöffnung der Werkzeugaufnahme, insbesondere unter Vermeidung einer gleichzeitigen Erwärmung des Werkzeugs durch die Abschirmeinheit, thermisch soweit aufgeweitet wird, bis das in der Werkzeugaufnahme befestigte Werkzeug aus der Werkzeugaufnahme entnehmbar ist. Unter einer "Ein- und/oder Ausschrumpfspannstation für Werkzeuge" soll insbesondere eine Vorrichtung verstanden werden, welche dazu vorgesehen ist, einen Einschrumpfvorgang und/oder einen Ausschrumpfvorgang von Werkzeugen in Werkzeugaufnahmen zumindest zu einem Großteil automatisiert, vorzugsweise vollständig automatisiert, vorzunehmen. Der Einschrumpfvorgang umfasst insbesondere alle für eine Befestigung des Werkzeugs in der Werkzeugaufnahme notwendigen Schritte, insbesondere inklusive des Einsetzens und/oder Entnehmens von Werkzeug und Werkzeugaufnahme in und/oder aus der Ein- und/oder Ausschrumpfspannstation. Der Ausschrumpfvorgang umfasst insbesondere alle für ein Lösen des Werkzeugs aus der Werkzeugaufnahme notwendigen Schritte, insbesondere inklusive des Einsetzens und/oder Entnehmens von Werkzeug und Werkzeugaufnahme in und/oder aus der Ein- und/oder Ausschrumpfspannstation.

Unter "zumindest einem Teil der Werkzeugaufnahme" soll insbesondere zumindest ein die Werkzeugaufnahmeöffnung der Werkzeugaufnahme umfassender Bereich der Werkzeugaufnahme verstanden werden. Die Abschirmeinheit ist insbesondere dazu vorgesehen, das Induktionsmagnetfeld der Induktionsspule von dem ein- und/oder auszuschrumpfenden Werkzeug abzuschirmen. Insbesondere ist die Abschirmeinheit dazu vorgesehen, eine Erwärmung des Werkzeugs bei dem Einschrumpfvorgang und/oder bei dem Ausschrumpfvorgang zumindest wesentlich zu verhindern. Insbesondere ist eine, insbesondere mittlere, Magnetfeldstärke des Induktionsmagnetfelds der Induktionsspule auf einer der Induktionsspule gegenüberliegenden Seite der Abschirmeinheit um zumindest 80%, vorzugsweise um zumindest 90 % und bevorzugt um zumindest 99 % im Vergleich zu einer Anordnung ohne Abschirmeinheit reduziert. Unter einem "wesentlichen Abschirmen" eines Induktionsmagnetfelds soll insbesondere ein Abschirmen von zumindest 80%, vorzugsweise von zumindest 90 % und bevorzugt von zumindest 99 % des Induktionsmagnetfelds verstanden werden. Unter der Wendung "betriebsmäßig" soll insbesondere während eines Betriebs der Induktionsheizvorrichtung und/oder der Ein- und/oder Ausschrumpfspannstation verstanden werden. Insbesondere sind betriebsmäßig voneinander entkoppelbare Baueinheiten in einem Einbauzustand in der Ein- und/oder Ausschrumpfspannstation und/oder in einem einsatzbereiten Zustand voneinander entkoppelbar. Insbesondere bilden betriebsmäßig voneinander entkoppelbare Baueinheiten zumindest teilweise voneinander getrennt ausgebildete Baueinheiten, vorzugsweise vollständig getrennt ausgebildete Baueinheiten, aus. Vorteilhaft sind die Induktionsheizeinheit und die Abschirmeinheit betriebsmäßig vollständig voneinander entkoppelbar. Insbesondere ist eine Bewegung der Induktionsheizeinheit von einer Bewegung der Abschirmeinheit entkoppelt. Insbesondere ist die Bewegung der Abschirmeinheit von der Bewegung der Induktionsheizeinheit entkoppelt.

Insbesondere ist die Axialrichtung in einem betriebsbereiten Zustand der Induktionsheizvorrichtung, insbesondere der Ein- und/oder Ausschrumpfspannstation mit der Induktionsheizvorrichtung, als eine Vertikalachse ausgebildet. Insbesondere verläuft die Vertikalachse in der Aufstellposition der Induktionsheizvorrichtung, insbesondere der Ein- und/oder Ausschrumpfspannstation mit der Induktionsheizvorrichtung, senkrecht zu einer Aufstellfläche, auf welche die Induktionsheizvorrichtung, insbesondere der Ein- und/oder Ausschrumpfspannstation mit der Induktionsheizvorrichtung, aufgestellt ist. Insbesondere verläuft die Axialrichtung parallel zu der Vertikalachse. Insbesondere ist die Induktionsheizeinheit dazu vorgesehen, einen Durchmesser einer Werkzeugaufnahme, beispielsweise mittels einer Bestimmung einer Induktivität der Induktionsspule und/oder mittels einer Bestimmung eines Spulenstroms der Induktionsspule einer auf eine Werkzeugaufnahme aufgesetzten Induktionsheizeinheit zu ermitteln.

Erfindungsgemäß bildet die Abschirmeinheit zugleich eine Werkzeuggreifereinheit, welche dazu vorgesehen ist, ein Werkzeug in die Werkzeugaufnahme einzusetzen und/oder aus der Werkzeugaufnahme zu entnehmen. Dadurch kann vorteilhaft ein Schrumpfspannprozess optimiert werden. Insbesondere kann vorteilhaft ein zeitlicher Abstand zwischen einer Erwärmung der Werkzeugaufnahme und einem Einsetzen und/oder Entnehmen des Werkzeugs in und/oder aus der Werkzeugaufnahme besonders kurzgehalten werden, wodurch vorteilhaft eine Geschwindigkeit des Schrumpfspannprozesses erhöht werden kann. Dies ist insbesondere dadurch begründet, dass vorteilhaft darauf verzichtet werden kann, die Induktionsheizeinheit und/oder die Abschirmeinheit vor einem Greifen des Werkzeugs aus dem Nahbereich des Werkzeugs und/oder der Werkzeugaufnahme zu entfernen, um einen vorgesehenen Greifbereich des Werkzeugs für einen Werkzeuggreifer zugänglich zu machen. Insbesondere kann dadurch bei einem Ausschrumpfen eine Erwärmung des Werkzeugs, beispielsweise durch eine Wärmeleitung von der Werkzeugaufnahme zu dem Werkzeug, besonders gering gehalten werden,
wodurch eine Entnahme des Werkzeugs vorteilhaft vereinfacht und/oder beschleunigt werden kann. Insbesondere kann dadurch bei einem Einschrumpfen ein Wärmeeintrag in die Werkzeugaufnahme besonders gering gehalten werden, insbesondere da eine Abkühlperiode zwischen einem Aufheizen der Werkzeugaufnahme und einem Einsetzen des Werkzeugs in die aufgeheizte Werkzeugaufnahme besonders kurz gehalten werden kann, wodurch ein Einsetzen des Werkzeugs vorteilhaft beschleunigt werden kann und/oder ein Energieverbrauch vorteilhaft reduziert werden kann. Zudem kann dadurch vorteilhaft eine besonders kompakte Bauweise einer Ein- und/oder Ausschrumpfspannstation erreicht werden, da insbesondere auf einen separaten Werkzeuggreifer zu einem Einsetzen und/oder Entnehmen des Werkzeugs bei dem Ein- und/oder Ausschrumpfvorgang verzichtet werden kann. Außerdem kann vorteilhaft eine axiale Ausrichtung der Werkzeuggreifereinheit relativ zu anderen Baueinheiten einer Ein- und/oder Ausschrumpfspannstation, beispielsweise relativ zu einer Haltevorrichtung für Werkzeugaufnahmen und/oder relativ zu einer Messvorrichtung während allen Betriebszuständen der Ein- und/oder Ausschrumpfspannstation konstant gehalten werden. Dadurch kann vorteilhaft eine besonders hohe axiale Genauigkeit erzielt werden. Im Gegensatz dazu muss insbesondere eine Werkzeuggreifereinheit, welche seitlich weggefahren werden muss, um Platz für eine Induktionsheizvorrichtung und/oder für eine Abschirmeinheit zu schaffen, jedes Mal aufs Neue und auf Kosten von Genauigkeit und Geschwindigkeit axial relativ zu der jeweiligen Werkzeugaufnahme ausgerichtet werden. Insbesondere ist die Werkzeuggreifereinheit dazu vorgesehen, das Werkzeug zu greifen. Insbesondere ist die Werkzeuggreifereinheit dazu vorgesehen, das Werkzeug relativ zu der Axialrichtung der Induktionsspule zu bewegen. Insbesondere ist die Werkzeuggreifereinheit dazu vorgesehen, das Werkzeug relativ zu einer Axialrichtung der Werkzeugaufnahme zu bewegen. Insbesondere ist die Werkzeuggreifereinheit dazu vorgesehen, das Werkzeug parallel zu einer Bewegungsachse der Induktionsheizeinheit, vorzugsweise entlang einer Bewegungsachse der Induktionsheizeinheit zu bewegen.

Des Weiteren wird vorgeschlagen, dass die Abschirmeinheit eine Anordnung von beweglich gelagerten Abschirmelementen umfasst. Dadurch kann vorteilhaft ein sicheres und/oder effizientes Greifen von Werkzeugen ermöglicht werden. Zudem kann vorteilhaft ein Greifen von Werkzeugen mit verschiedenen Durchmessern, insbesondere Schaftdurchmessern ermöglicht werden. Des Weiteren kann vorteilhaft zugleich eine besonders effiziente Abschirmung des Induktionsmagnetfelds erreicht werden. Insbesondere umfasst die Abschirmeinheit zumindest zwei, vorzugsweise zumindest vier, bevorzugt zumindest sechs und besonders bevorzugt zumindest acht zueinander beweglich gelagerte Abschirmelemente. Insbesondere sind die Abschirmelemente in einer gemeinsamen Ebene relativ zueinander beweglich gelagert.

Außerdem wird vorgeschlagen, dass die beweglich gelagerten Abschirmelemente einen Werkzeuggreifer der Werkzeuggreifereinheit zumindest teilweise ausbilden. Dadurch kann vorteilhaft ein sicheres und/oder effizientes Greifen von Werkzeugen ermöglicht werden. Zudem kann vorteilhaft ein Greifen von Werkzeugen mit verschiedenen Durchmessern, insbesondere verschiedenen Schaftdurchmessern ermöglicht werden. Insbesondere sind die beweglich gelagerten Abschirmelemente dazu vorgesehen, das Werkzeug entlang seines Umfangs zu kontaktieren. Insbesondere sind die beweglich gelagerten Abschirmelemente dazu vorgesehen, eine entlang des Umfangs des Werkzeugs wirkende Kraft auf das Werkzeug auszuüben, welche insbesondere ein Greifen des Werkzeugs bewirkt. Insbesondere weist die Induktionsheizvorrichtung einen Lagermechanismus auf. Insbesondere sind die beweglich gelagerten Abschirmelemente mittels des Lagermechanismus, insbesondere automatisiert, bewegbar. Vorzugsweise ist der Lagermechanismus dazu vorgesehen, die beweglich gelagerten Abschirmelemente hydraulisch, pneumatisch und/oder mittels eines Stellmotors zu bewegen. Insbesondere sind die beweglich gelagerten Abschirmelemente zumindest senkrecht zu der Axialrichtung bewegbar. Insbesondere ist der Lagermechanismus dazu vorgesehen, die beweglich gelagerten Abschirmelemente derart zu bewegen, dass mittels der Abschirmelemente ein Werkzeug ergreifbar ist.

Zusätzlich wird vorgeschlagen, dass die beweglich gelagerten Abschirmelemente derart relativ zueinander verschiebbar sind, dass sie eine zumindest im Wesentlichen geschlossene Abschirmebene mit einer variablen Öffnung zur Aufnahme von Werkzeugen, insbesondere von Werkzeugschäften, vorzugsweise mit verschiedenen Durchmessern, ausbilden. Dadurch kann vorteilhaft ein sicheres und/oder effizientes Greifen von Werkzeugen mit verschiedenen Durchmessern, insbesondere Schaftdurchmessern, ermöglicht werden. Des Weiteren kann vorteilhaft zugleich eine besonders effiziente Abschirmung des Induktionsmagnetfelds erreicht werden. Insbesondere erstreckt sich die Abschirmebene senkrecht zu der Axialrichtung. Insbesondere liegen die Abschirmelemente aneinander an und/oder überlappen sich teilweise gegenseitig. Insbesondere sind die Abschirmelemente rund um ein Zentrum der Abschirmeinheit angeordnet. Insbesondere beträgt ein Durchmesser der variablen Öffnung in einem maximal geöffneten Zustand zumindest 80 mm, vorzugsweise zumindest 65 mm, bevorzugt zumindest 50 mm und besonders bevorzugt zumindest 40 mm. Dadurch kann vorteilhaft sichergestellt werden, dass die Abschirmeinheit bzw. die Werkzeuggreifereinheit über Werkzeuge mit großen und/oder ausladend geformten Bearbeitungselementen, insbesondere Schneiden, bewegt werden kann. Insbesondere beträgt der Durchmesser der variablen Öffnung in dem maximal geöffneten Zustand höchstens 80 mm, vorzugsweise höchstens 50 mm. Insbesondere beträgt ein kleinstmöglicher Durchmesser der variablen Öffnung in einem maximal geschlossenen Zustand höchstens 3 mm, vorzugsweise höchstens 2 mm und bevorzugt höchstens 1 mm. Besonders bevorzugt ist die variable Öffnung in dem maximal geschlossenen Zustand vollständig geschlossen.

Zudem wird vorgeschlagen, dass die beweglich gelagerten Abschirmelemente Lamellen eines Lamellenverschlusses oder zumindest senkrecht zur Axialrichtung verschiebbare Schieberelemente ausbilden. Dadurch kann ein besonders vorteilhaftes Greifen von Werkzeugen bei einer zugleich besonders vorteilhaften Abschirmung ermöglicht werden. Insbesondere sind die Lamellen des Lamellenverschlusses analog zu einer Irisblende und/oder einem Zentralverschluss eines Fotoapparats angeordnet und relativ zueinander bewegbar. Insbesondere umfasst der Lamellenverschluss mehrere, beispielsweise vier, fünf, sechs, sieben oder acht, Lamellen, welche vorzugsweise mittels einer Mechanik gemeinsam nach innen oder außen drehbar sind. Insbesondere ist dabei jede Lamelle auf einer Achse gelagert. Vorzugsweise sind alle Lamellen über ein Ringelement miteinander verbunden, welches dazu vorgesehen ist, eine gemeinsame Bewegung der Lamellen zu erzeugen und/oder zu lenken. Insbesondere weist das Schieberelement eine Rechteckform, eine Keilform oder eine Prismenform auf. Beispielsweise ist denkbar, dass die Schieberelemente als zwei prismenförmige Backen ausgebildet sind, welche zumindest teilweise übereinanderschiebbar sind und somit in einem ein Werkzeug greifenden Zustand eine in der Größe variable, zentrale prismenförmige Öffnung zur Aufnahme des Werkzeugs erzeugen.

Weiterhin wird vorgeschlagen, dass zumindest eines der die Werkzeuggreifereinheit ausbildenden Schieberelemente, vorzugsweise zumindest eine Mehrzahl der die Werkzeuggreifereinheit ausbildenden Schieberelemente ein Rollenelement ausbildet oder ein Rollenelement aufweist. Insbesondere ist das Rollenelement rotierbar ausgebildet. Insbesondere ist das Rollenelement mittels eines Antriebsmechanismus gesteuert rotierbar. Insbesondere ist das Rollenelement dazu vorgesehen, ein durch die Werkzeuggreifereinheit gegriffenes Werkzeug, insbesondere um eine vorgesehene Rotationsachse des Werkzeugs, zu rotieren. Insbesondere ist das Rollenelement um eine parallel zu der Axialrichtung, insbesondere parallel zu einer Rotationsachse eines durch die Werkzeuggreifereinheit gegriffenen Werkzeugs, verlaufende Rotationsachse rotierbar. Dadurch kann vorteilhaft eine besonders exakte Positionierung des Werkzeugs durch die Werkzeuggreifereinheit ermöglicht werden, wodurch insbesondere ein besonders präzises Vermessen des Werkzeugs und/oder Einstellen des Werkzeugs, insbesondere der Länge des Werkzeugs relativ zu der Werkzeugaufnahme, ermöglicht werden kann.

Wenn die Abschirmelemente zumindest zu einem Großteil aus einem weichmagnetischen, elektrisch im Wesentlichen nichtleitenden Material, beispielsweise aus weichmagnetischem Ferrit, ausgebildet sind, kann vorteilhaft eine besonders effektive Magnetfeldabschirmung erreicht werden. Unter "einem Großteil" soll insbesondere zumindest 75 %, vorzugsweise zumindest 85 %, vorteilhaft zumindest 95 % und bevorzugt zumindest 99 % verstanden werden. Unter einem "weichmagnetischen Material" soll insbesondere ein Material verstanden werden, welches sich leicht magnetisieren lässt. Insbesondere besitzt ein weichmagnetisches Material eine Koerzitivfeldstärke von höchstens 1000 A/m, vorzugsweise höchstens 700 A/m, vorteilhaft höchstens 500 A/m, besonders vorteilhaft höchstens 300 A/m, bevorzugt höchstens 100 A/m und besonders bevorzugt höchstens 50 A/m. Unter einem "im Wesentlichen nichtleitenden Material" soll insbesondere ein Material mit einem spezifischen Widerstand größer als 10 Ωcm, vorzugsweise größer als 100 Ωcm, bevorzugt größer als 1000 Ωcm und besonders bevorzugt größer als 10000 Ωcm verstanden werden. Der weichmagnetische Ferrit ist insbesondere als MnZn-Ferrit oder vorzugsweise als NiZn-Ferrit ausgebildet.

Ferner wird ein Verfahren mit der Induktionsheizvorrichtung, dessen Abschirmeinheit zugleich eine Werkzeuggreifereinheit ausbildet, welche dazu vorgesehen ist, ein Werkzeug in die Werkzeugaufnahme einzusetzen und/oder aus der Werkzeugaufnahme zu entnehmen vorgeschlagen, wobei in einem Betriebszustand, in dem die Induktionsheizeinheit auf die Werkzeugaufnahme aufgesetzt ist, das in die Werkzeugaufnahme eingesetzte Werkzeug von der Werkzeuggreifereinheit in einem Nahbereich einer Werkzeugaufnahmeöffnung der Werkzeugaufnahme gegriffen wird. Dadurch kann vorteilhaft ein Schrumpfspannprozess optimiert werden. Insbesondere kann vorteilhaft ein zeitlicher Abstand zwischen einer Erwärmung der Werkzeugaufnahme und einem Einsetzen und/oder Entnehmen des Werkzeugs in und/oder aus der Werkzeugaufnahme besonders kurzgehalten werden, wodurch vorteilhaft eine Geschwindigkeit des Schrumpfspannprozesses erhöht werden kann. Unter einem "Nahbereich" soll in diesem Zusammenhang insbesondere ein Bereich des Werkzeugs, insbesondere des Werkzeugschafts verstanden werden, welcher aus Punkten gebildet wird, die einen maximalen Abstand von der Werkzeugaufnahmeöffnung von 10 mm, vorzugsweise von 6 mm, vorteilhaft von 4 mm, bevorzugt von 3 mm und besonders bevorzugt von 2 mm aufweisen. Insbesondere wird das Werkzeug durch die Werkzeuggreifereinheit in dem Nahbereich der Werkzeugaufnahmeöffnung gegriffen während die Induktionsspule auf die Werkzeugaufnahme aufgesetzt ist.

Außerdem wird ein Verfahren mit einer Induktionsheizvorrichtung, deren Abschirmeinheit eine Anordnung von beweglich gelagerten Abschirmelementen umfasst vorgeschlagen, wobei die beweglich gelagerten Abschirmelemente der Abschirmeinheit dazu verwendet werden, ein Werkzeug, insbesondere einen Werkzeugschaft, zu greifen. Dadurch kann vorteilhaft ein Schrumpfspannprozess optimiert werden. Insbesondere kann vorteilhaft ein zeitlicher Abstand zwischen einer Erwärmung der Werkzeugaufnahme und einem Einsetzen und/oder Entnehmen des Werkzeugs in und/oder aus der Werkzeugaufnahme besonders kurzgehalten werden, wodurch vorteilhaft eine Geschwindigkeit des Schrumpfspannprozesses erhöht werden kann. Zudem kann vorteilhaft auf eine zusätzliche, separate Werkzeuggreifereinheit verzichtet werden, wodurch insbesondere Kosten und/oder ein benötigter Bauraum reduziert werden können.

Zusätzlich wird eine Ein- und/oder Ausschrumpfspannstation für Werkzeuge zu einem zumindest zu einem Großteil automatisierten Ein- und/oder Ausschrumpfen von Werkzeugen in und/oder aus Werkzeugaufnahmen mit einer Werkzeuggreifereinheit, welche dazu vorgesehen ist, ein Werkzeug zur Durchführung eines Einschrumpfvorgangs in eine Werkzeugaufnahme einzusetzen und/oder ein Werkzeug zu einer Durchführung eines Ausschrumpfvorgangs aus einer Werkzeugaufnahme zu entnehmen und mit einer Haltevorrichtung für eine Werkzeugaufnahme vorgeschlagen, wobei eine relative Positionierung der Werkzeuggreifereinheit und der Haltevorrichtung zueinander, abgesehen von der relativen Positionierung entlang einer gemeinsamen Axialrichtung der Werkzeuggreifereinheit und der Haltevorrichtung, insbesondere entlang der Vertikalachse der Ein- und/oder Ausschrumpfspannstation, während des gesamten Einschrumpfvorgangs und/oder während des gesamten Ausschrumpfvorgangs zumindest im Wesentlichen konstant ist. Dadurch kann vorteilhaft ein Schrumpfspannprozess optimiert werden. Insbesondere kann vorteilhaft eine besonders hohe axiale Genauigkeit erreicht werden, insbesondere bei einem Einsetzen eines Werkzeugs in einer Werkzeugaufnahme und/oder bei einem Entnehmen des Werkzeugs aus der Werkzeugaufnahme. Vorteilhaft kann zudem eine Geschwindigkeit des Schrumpfspannprozesses erhöht werden. Erfindungsgemäß ist die Werkzeuggreifereinheit während des gesamten Einschrumpfvorgangs und/oder während des gesamten Ausschrumpfvorgangs ausschließlich entlang der Axialrichtung, insbesondere entlang der Vertikalachse, relativ zu der Haltevorrichtung bewegbar. Erfindungsgemäß wird die Werkzeuggreifereinheit während des gesamten Einschrumpfvorgangs und/oder während des gesamten Ausschrumpfvorgangs, ausschließlich entlang der Axialrichtung, insbesondere entlang der Vertikalachse, bewegt. Erfindungsgemäß ist die Werkzeuggreifereinheit nicht in eine Richtung senkrecht zu der Axialrichtung, insbesondere senkrecht zu der Vertikalachse, bewegbar. Die Werkzeuggreifereinheit weist insbesondere eine Werkzeuggreiferachse auf, welche vorzugsweise senkrecht zu der durch die Abschirmelemente der Werkzeuggreifereinheit ausgebildeten Abschirmebene und zentral durch die durch die Abschirmelemente gebildete variable Öffnung verläuft. Die Haltevorrichtung weist insbesondere eine Rotationsachse auf. Insbesondere überlappen die Rotationsachse der Haltevorrichtung und die Halteachse der Werkzeuggreifereinheit während des gesamten Einschrumpfvorgangs und/oder während des gesamten Ausschrumpfvorgangs. Unter "zu einem Großteil automatisiert" soll insbesondere verstanden werden, dass mit Ausnahme der Eingabe des Werkzeugs und/oder der Werkzeugaufnahme in die Ein- und/oder Ausschrumpfspannstation und/oder mit Ausnahme der Entnahme des Werkzeugs und/oder der Werkzeugaufnahme aus der Ein- und/oder Ausschrumpfspannstation alle Arbeitsschritte unabhängig von einem Bediener ablaufen. Zudem ist vorstellbar, dass auch die Eingabe und/oder die Entnahme des Werkzeugs und/oder der Werkzeugaufnahme automatisiert ist, beispielsweise mit Hilfe eines Industrieroboters. Unter einer "Positionierung" kann insbesondere auch eine Position verstanden werden.

Insbesondere umfasst die Haltevorrichtung eine Spindeleinheit. Insbesondere ist die Spindeleinheit rotierbar ausgebildet. Insbesondere ist die Spindeleinheit um eine parallel zu der Axialrichtung verlaufende Rotationsachse rotierbar. Die Rotationsachse der Spindeleinheit ist insbesondere identisch zu der Rotationsachse der Haltevorrichtung ausgebildet. Insbesondere ist die Rotationsachse der Spindeleinheit identisch zu Rotationsachsen von in der Haltevorrichtung gehalterten Werkzeugen. Insbesondere umfasst die Haltevorrichtung einen Vorsatzhalter. Insbesondere ist der Vorsatzhalter zumindest rotationsfest, vorzugsweise translationsfest, in der Spindeleinheit befestigbar. Insbesondere ist der Vorsatzhalter austauschbar ausgebildet. Insbesondere ist jeder Vorsatzhalter dazu vorgesehen, ein Aufnahmeelement für zumindest eine spezielle Werkzeugaufnahme und/oder für zumindest ein spezielles Komplettwerkzeug auszubilden. Verschiedene Vorsatzhalter sind insbesondere verschiedenen Werkzeugaufnahmen und/oder Komplettwerkzeugen zugeordnet. Insbesondere umfasst der Einschrumpfvorgang alle Arbeitsschritte der Ein- und/oder Ausschrumpfspannstation ab einer Eingabe eines Werkzeugs in die Ein- und/oder Ausschrumpfspannstation bis zu einem erfolgreichen Befestigen des Werkzeugs in der Werkzeugaufnahme. Insbesondere umfasst der Ausschrumpfvorgang alle Arbeitsschritte der Ein- und/oder Ausschrumpfspannstation ab einer Eingabe einer Werkzeugaufnahme, in welcher ein Werkzeug befestigt ist, in die Ein- und/oder Ausschrumpfspannstation bis zu einer erfolgreichen Entnahme des Werkzeugs aus der Werkzeugaufnahme. Unter einer "im Wesentlichen konstanten Positionierung" soll in diesem Zusammenhang insbesondere verstanden werden, dass Bewegungen der Werkzeuggreifereinheit frei sind von Komponenten in eine Richtung senkrecht zu der Axialrichtung, insbesondere senkrecht zu der Vertikalrichtung, welche über ein Ausmaß von zu erwartenden Toleranzen, z.B. Spieltoleranzen hinaus gehen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Ein- und/oder Ausschrumpfspannstation eine Induktionsheizeinheit aufweist, wobei eine relative Positionierung der Werkzeuggreifereinheit und der Induktionsheizeinheit und/oder einer Längeneinstelleinheit der Ein- und/oder Ausschrumpfspannstation zueinander, abgesehen von der relativen Positionierung entlang einer gemeinsamen Axialrichtung der Werkzeuggreifereinheit und der Induktionsheizeinheit und/oder der Längeneinstelleinheit, während des gesamten Einschrumpfvorgangs und/oder während des gesamten Ausschrumpfvorgangs zumindest im Wesentlichen konstant ist. Dadurch kann vorteilhaft ein Schrumpfspannprozess optimiert werden. Insbesondere kann vorteilhaft eine besonders hohe axiale Genauigkeit erreicht werden, insbesondere bei einem Einsetzen eines Werkzeugs in einer Werkzeugaufnahme und/oder bei einem Entnehmen des Werkzeugs aus der Werkzeugaufnahme. Vorteilhaft kann zudem eine Geschwindigkeit des Schrumpfspannprozesses erhöht werden. Insbesondere ist die Werkzeuggreifereinheit, insbesondere während des gesamten Einschrumpfvorgangs und/oder während des gesamten Ausschrumpfvorgangs, ausschließlich entlang der Axialrichtung, insbesondere entlang der Vertikalachse, relativ zu der Induktionsheizeinheit und/oder zu einer Längeneinstelleinheit bewegbar. Insbesondere wird die Induktionsheizeinheit während des gesamten Einschrumpfvorgangs und/oder während des gesamten Ausschrumpfvorgangs, ausschließlich entlang der Axialrichtung, insbesondere entlang der Vertikalachse, bewegt. Insbesondere ist die Induktionsheizeinheit nicht in eine Richtung senkrecht zu der Axialrichtung, insbesondere senkrecht zu der Vertikalachse, bewegbar. Die Induktionsspule der Induktionsheizeinheit weist insbesondere eine Spulenachse auf, welche vorzugsweise zentral entlang eines Inneren von Spulenwicklungen der Induktionsspule verläuft. Insbesondere überlappen die Halteachse der Werkzeuggreifereinheit und die Spulenachse während des gesamten Einschrumpfvorgangs und/oder während des gesamten Ausschrumpfvorgangs.

Des Weiteren wird vorgeschlagen, dass die Ein- und/oder Ausschrumpfspannstation eine Antriebswelle aufweist, welche dazu vorgesehen ist, zur voneinander unabhängigen Einstellung der axialen Positionen der Induktionsheizeinheit und der Werkzeuggreifereinheit mit der Induktionsheizeinheit und mit der Werkzeuggreifereinheit zu koppeln. Dadurch kann vorteilhaft ein Schrumpfspannprozess optimiert werden. Insbesondere kann vorteilhaft eine besonders hohe axiale Genauigkeit erreicht werden. Vorteilhaft kann zudem eine Geschwindigkeit des Schrumpfspannprozesses erhöht werden. Außerdem kann vorteilhaft ein platz- und/oder kostensparender Aufbau der Ein- und/oder Ausschrumpfspannstation erreicht werden. Insbesondere weist die Ein- und/oder Ausschrumpfspannstation zumindest ein Positionsbestimmungssystem auf, welches dazu vorgesehen ist, eine Position der Induktionsheizeinheit und/oder der Werkzeuggreifereinheit auf der Antriebswelle zu bestimmen. Alternativ ist natürlich auch denkbar, dass zumindest eine Komponente durch einen separaten Antrieb, insbesondere eine separate Antriebswelle, bewegt wird oder dass alle Komponenten separate Antriebe, insbesondere separate Antriebswellen, haben.

Zudem wird vorgeschlagen, dass die Induktionsheizeinheit und die Werkzeuggreifereinheit jeweils über ein Rollringgetriebe mit der Antriebswelle koppelbar sind. Dadurch kann vorteilhaft ein Schrumpfspannprozess optimiert werden. Insbesondere kann vorteilhaft eine besonders hohe axiale Genauigkeit erreicht werden. Vorteilhaft kann zudem eine Geschwindigkeit des Schrumpfspannprozesses erhöht werden. Außerdem kann vorteilhaft ein platz- und/oder kostensparender Aufbau der Ein- und/oder Ausschrumpfspannstation erreicht werden. Insbesondere sind die Induktionsheizeinheit und die Werkzeuggreifereinheit jeweils mittels eines Uhing-Antriebs bewegbar, wobei vorzugsweise der Uhing-Antrieb der Induktionsheizeinheit und der Uhing-Antrieb der Werkzeuggreifereinheit eine gemeinsame Antriebswelle aufweisen. Insbesondere umfasst das Rollringgetriebe eine Uhing-Mutter für jede separat bewegbare Komponente. Insbesondere ist das der Werkzeuggreifereinheit zugeordnete Rollringgetriebe, insbesondere die Uhing-Mutter des der Werkzeuggreifereinheit zugeordneten Rollringgetriebes, wahlweise mit der Antriebswelle gekoppelt oder von der Antriebswelle entkoppelt. Insbesondere ist das der Induktionsheizeinheit zugeordnete Rollringgetriebe, insbesondere die Uhing-Mutter des der Induktionsheizeinheit zugeordneten Rollringgetriebes, wahlweise mit der Antriebswelle gekoppelt oder von der Antriebswelle entkoppelt. Insbesondere erfolgt eine Kopplung und/oder eine Entkopplung des Rollringgetriebes, insbesondere der jeweiligen Uhing-Mutter, mittels einer pneumatischen Beaufschlagung des Rollringgetriebes, insbesondere der jeweiligen Uhing-Mutter.

Weiterhin wird vorgeschlagen, dass die Abschirmeinheit und die Werkzeuggreifereinheit zumindest teilweise einstückig miteinander ausgebildet sind. Dadurch kann vorteilhaft ein Schrumpfspannprozess optimiert werden. Vorteilhaft kann eine Geschwindigkeit und/oder eine Effizienz des Schrumpfspannprozesses erhöht werden. Zudem kann vorteilhaft ein platz- und/oder kostensparender Aufbau der Ein- und/oder Ausschrumpfspannstation erreicht werden. Insbesondere bildet zumindest ein Abschirmelement, vorzugsweise die Abschirmelemente, Greiferelemente der Werkzeuggreifereinheit aus. Darunter, dass zwei Einheiten "teilweise einstückig" ausgebildet sind, soll insbesondere verstanden werden, dass die Einheiten zumindest ein, insbesondere zumindest zwei, vorteilhaft zumindest drei gemeinsame Elemente aufweisen, die Bestandteil, insbesondere funktionell wichtiger Bestandteil, beider Einheiten sind.

Zusätzlich wird vorgeschlagen, dass die Ein- und/oder Ausschrumpfspannstation eine Längeneinstelleinheit aufweist, welche dazu vorgesehen ist, ein Werkzeug während des Einschrumpfvorgangs, insbesondere unter Zuhilfenahme der Werkzeuggreifereinheit, auf Länge einzustellen. Dadurch kann vorteilhaft ein Schrumpfspannprozess optimiert werden. Vorteilhaft kann eine hohe Präzision und/oder eine hohe Effizienz der Ein- und/oder Ausschrumpfspannstation erreicht werden. Unter einem "Einstellen auf Länge" soll insbesondere ein Einstellen einer Gesamtlänge der Werkzeugaufnahme mit dem darin befestigten Werkzeug verstanden werden und/oder ein Einstellen einer Einstecktiefe des Werkzeugs in der Werkzeugaufnahmeöffnung der Werkzeugaufnahme. Insbesondere ist die Längeneinstelleinheit dazu vorgesehen, zumindest eine Länge eines Werkzeugs, welches mittels Werkzeuggreifereinheit zwischen Messpunkten der Längeneinstelleinheit bewegt wird, zu ermitteln. Insbesondere ist die Längeneinstelleinheit dazu vorgesehen, zumindest eine Position der Werkzeugaufnahme, insbesondere der Werkzeugaufnahmeöffnung der Werkzeugaufnahme, insbesondere entlang der Axialrichtung, zu ermitteln. Insbesondere weist die Ein- und/oder Ausschrumpfspannstation zumindest eine Steuer- und/oder Regeleinheit auf. Insbesondere ist die Steuer- und/oder Regeleinheit zumindest dazu vorgesehen, eine Längeneinstellung und/oder eine Längenbestimmung der Längeneinstelleinheit zu steuern. Insbesondere ist die Steuer- und/oder Regeleinheit zumindest dazu vorgesehen, eine Bewegung der Werkzeuggreifereinheit, insbesondere der Greiferelemente der Werkzeuggreifereinheit, der Induktionsheizeinheit und/oder der Haltevorrichtung zu steuern. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden.

Des Weiteren wird vorgeschlagen, dass die Längeneinstelleinheit zumindest eine, insbesondere optische und/oder taktile, Sensoreinheit aufweist, welche entlang einer Axialbewegungsrichtung der Werkzeuggreifereinheit angeordnet ist und welche zu einer Bestimmung einer Referenzlänge eines einzuschrumpfenden Werkzeugs vorgesehen ist. Dadurch kann vorteilhaft ein Schrumpfspannprozess optimiert werden. Vorteilhaft kann eine hohe Präzision und/oder eine hohe Effizienz der Ein- und/oder Ausschrumpfspannstation erreicht werden. Vorteilhaft kann eine einfache Längeneinstellung ermöglicht werden. Die Sensoreinheit ist insbesondere als eine Lichtschranke, beispielsweise eine Laser-Lichtschranke, ausgebildet. Alternativ kann die Sensoreinheit als ein Kraftaufnehmer, beispielsweise eine taktile Messdose, ausgebildet sein, welche vorzugsweise dazu vorgesehen ist, bei einem Registrieren eines Kontakts, insbesondere des Werkzeugs mit dem Kraftaufnehmer, ein Messignal an die Steuer- und/oder Regeleinheit auszusenden. Insbesondere ist die Sensoreinheit positionsfest entlang der Axialrichtung, insbesondere entlang der Vertikalachse, der Ein- und/oder Ausschrumpfspannstation angeordnet. Insbesondere ist die Sensoreinheit getrennt von der Werkzeuggreifereinheit und/oder von der Induktionsheizeinheit ausgebildet. Insbesondere ist die Werkzeuggreifereinheit dazu vorgesehen, ein von der Werkzeuggreifereinheit gegriffenes Werkzeug in einen Messbereich der Sensoreinheit zu bewegen. Insbesondere ist die Steuer- und/oder Regeleinheit dazu vorgesehen, aus einer Axialposition der Werkzeuggreifereinheit zu einem Zeitpunkt einer Registrierung eines Messsignals durch die Sensoreinheit eine Länge des Werkzeugs zu ermitteln.

Zusätzlich wird vorgeschlagen, dass die Längeneinstelleinheit eine weitere, insbesondere optische, Sensoreinheit aufweist, welche in einem betriebsbereiten Zustand fest mit der Induktionsheizeinheit gekoppelt ist. Dadurch kann vorteilhaft ein Schrumpfspannprozess optimiert werden. Vorteilhaft kann eine hohe Präzision und/oder eine hohe Effizienz der Ein- und/oder Ausschrumpfspannstation erreicht werden. Vorteilhaft kann dadurch eine Länge der Werkzeugaufnahme und/oder eine Länge eines Längeneinstellpins der Ein- und/oder Ausschrumpfspannstation ermittelt werden. Vorteilhaft kann eine hohe Prozesssicherheit erreicht werden. Insbesondere ist die weitere Sensoreinheit als eine Lichtschranke, vorzugsweise Laser-Lichtschranke, ausgebildet. Insbesondere ist die weitere Sensoreinheit unterhalb der Induktionsheizeinheit angeordnet. Insbesondere ist die weitere Sensoreinheit derart mit der Induktionsheizeinheit gekoppelt, dass die weitere Sensoreinheit Bewegungen der Induktionsheizeinheit folgt. Insbesondere weist die weitere Sensoreinheit einen Messbereich auf, dessen Durchmesser zumindest einem maximalen Durchmesser einer Werkzeugaufnahmeöffnung der Induktionsheizeinheit, insbesondere der Induktionsspule, entspricht oder größer ist als der maximale Durchmesser der Werkzeugaufnahmeöffnung der Induktionsheizeinheit. Es ist denkbar, dass, insbesondere mittels Messdaten der weiteren Sensoreinheit und/oder mittels Messdaten der Werkzeugaufnahmen-Durchmesserbestimmung durch die Induktionsheizeinheit, die Ein- und/oder Ausschrumpfspannstation dazu vorgesehen ist, einen Werkzeugaufnahmetyp automatisch zu bestimmen.

Ferner wird ein Verfahren mit einer Ein- und/oder Ausschrumpfspannstation aufweisend zumindest die Induktionsheizeinheit, die Haltevorrichtung für Werkzeugaufnahmen und die Werkzeuggreifereinheit vorgeschlagen. Dadurch kann vorteilhaft ein Schrumpfspannprozess optimiert werden.

Wenn die Werkzeuggreifereinheit erfindungsgemäß während des gesamten Einschrumpfvorgangs und/oder während des gesamten Ausschrumpfvorgangs ausschließlich entlang einer einzelnen Achse, insbesondere ausschließlich entlang einer vorgesehenen Rotationsachse des ein- und/oder auszuschrumpfenden Werkzeugs, vorzugsweise ausschließlich entlang der Vertikalachse, verfahren wird, kann vorteilhaft ein Schrumpfspannprozess optimiert werden. Insbesondere kann vorteilhaft eine besonders hohe axiale Genauigkeit erreicht werden, insbesondere bei einem Einsetzen eines Werkzeugs in einer Werkzeugaufnahme und/oder bei einem Entnehmen des Werkzeugs aus der Werkzeugaufnahme. Vorteilhaft kann zudem eine Geschwindigkeit des Schrumpfspannprozesses erhöht werden. Zudem wird vorzugsweise auch die Induktionsheizeinheit während des gesamten Einschrumpfvorgangs und/oder während des gesamten Ausschrumpfvorgangs ausschließlich entlang derselben einzelnen Achse, insbesondere ausschließlich entlang der vorgesehenen Rotationsachse des ein- und/oder auszuschrumpfenden Werkzeugs, vorzugsweise ausschließlich entlang der

Vertikalachse, verfahren. Insbesondere werden die Werkzeuggreifereinheit und/oder die Induktionsheizeinheit während des gesamten Einschrumpfvorgangs und/oder während des gesamten Ausschrumpfvorgangs nicht in eine Richtung senkrecht zu der einzelnen Achse, insbesondere nicht in eine Richtung senkrecht zu der vorgesehenen Rotationsachse des ein- und/oder auszuschrumpfenden Werkzeugs, vorzugsweise nicht in eine Richtung senkrecht zu der Vertikalachse, verfahren. Insbesondere wird die Haltevorrichtung und/oder die in der Haltevorrichtung eingesetzte Werkzeugaufnahme während des gesamten Einschrumpfvorgangs und/oder während des gesamten Ausschrumpfvorgangs nicht translatorisch bewegt.

Außerdem wird ein Verfahren zu einem Einschrumpfen eines Werkzeugs in eine Werkzeugaufnahme mittels der Ein- und/oder Ausschrumpfspannstation vorgeschlagen. Dadurch kann vorteilhaft ein Einschrumpfvorgang optimiert werden.

Wenn erfindungsgemäß in zumindest einem Längeneinstellschritt des Verfahrens zu einem Einschrumpfen des Werkzeugs in die Werkzeugaufnahme zu einer Ermittlung einer vorgesehenen Einschrumpf- und/oder Spanntiefe des Werkzeugs das Werkzeug auf die noch unaufgeweitete Werkzeugaufnahme aufgestellt wird und im Anschluss das Werkzeug entlang der Axialrichtung, insbesondere des Werkzeugs, bewegt wird, bis eine Spitze des Werkzeugs von einer, insbesondere optischen oder taktilen, Sensoreinheit erfasst wird, kann vorteilhaft eine einfache und/oder effektive Längeneinstellung des Werkzeugs in der Werkzeugaufnahme erreicht werden. Vorteilhaft kann die Steuer- und/oder Einstelleinheit aus den auf eine Position der Haltevorrichtung bezogenen Relativpositionen des Werkzeuggreifers bei der Detektion der Spitze des Werkzeugs durch die Sensoreinheit und bei einem Aufstellen des Werkzeugs auf die unaufgeweitete Werkzeugaufnahme, insbesondere unter Kenntnis eines Werkzeugaufnahmetyps, eine Länge des Werkzeugs bestimmen. Zudem kann vorteilhaft bei einer vorangegangenen Vermessung der Werkzeugaufnahme durch die weitere Sensoreinheit eine Länge des Werkzeugs auch ohne exakte Kenntnis der Position der Haltevorrichtung und/oder ohne exakte Kenntnis des Werkzeugaufnahmetyps ermittelt werden. Unter einer "Einschrumpf- und/oder Spanntiefe" soll insbesondere die Länge eines Schafts eines Werkzeugs verstanden werden, welche sich in einem Zustand, in welchem das Werkzeug in der Werkzeugaufnahme befestigt ist, in einem Inneren der Werkzeugaufnahmeöffnung der Werkzeugaufnahme befindet.

Zudem wird ein Verfahren zu einem Ausschrumpfen eines Werkzeugs aus einer Werkzeugaufnahme mittels der Ein- und/oder Ausschrumpfspannstation vorgeschlagen. Dadurch kann vorteilhaft ein Einschrumpfvorgang optimiert werden.

Wenn erfindungsgemäß in zumindest einem Werkzeugentnahmeschritt des Verfahrens zu einem Ausschrumpfen des Werkzeugs in die Werkzeugaufnahme bereits während einer Aufheizphase eines Ausschrumpfvorgangs, in welchem eine Werkzeugaufnahme durch induktives Aufheizen aufgeweitet wird, mittels einer Werkzeuggreifereinheit der Ein- und/oder Ausschrumpfspannstation eine Entnahmezugkraft auf das Werkzeug ausgeübt wird, kann vorteilhaft eine besonders schnelle Entnahme des Werkzeugs aus der Werkzeugaufnahme erreicht werden. Dadurch kann vorteilhaft ein Ausschrumpfvorgang effizienter gestaltet werden, insbesondere indem ein Energieeintrag in die Werkzeugaufnahme bei dem Ausschrumpfvorgang minimiert werden kann. Zudem kann vorteilhaft ein Erhitzen und ein damit verbundenes analoges Aufweiten des Werkzeugs bei dem Ausschrumpfvorgang vermieden werden, wodurch vorteilhaft eine besonders hohe Ausschrumpf-Erfolgsquote erreicht werden kann. Vorteilhaft wird durch das beschriebene Verfahren das Werkzeug unmittelbar nachdem die Werkzeugaufnahmeöffnung der Werkzeugaufnahme eine ausreichende Aufweitung erfahren hat, bei welcher mittels der durch die Werkzeuggreifereinheit angelegten Kraft das Werkzeug aus der Werkzeugaufnahmeöffnung der Werkzeugaufnahme herausgezogen werden kann, aus der Werkzeugaufnahme gelöst. Eine Wärmeleitung der durch die Induktionsheizeinheit erzeugten Wärme von der Werkzeugaufnahme zu dem Werkzeug wird dadurch vorteilhaft wesentlich unterbunden.

Die erfindungsgemäße Induktionsheizvorrichtung, die erfindungsgemäße Ein- und/oder Ausschrumpfspannstation und die erfindungsgemäßen Verfahren sollen hierbei nicht auf die oben beschriebene Anwendung und Ausführungsform beschränkt sein. Insbesondere können die erfindungsgemäße Induktionsheizvorrichtung, die erfindungsgemäße Ein- und/oder Ausschrumpfspannstation und die erfindungsgemäßen Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination.

Es zeigen:
- Fig. 1: eine schematische, perspektivische Ansicht einer Ein- und/oder Ausschrumpfspannstation mit einer Induktionsheizvorrichtung,
- Fig. 2: eine schematische Schnittansicht der Ein- und/oder Ausschrumpfspannstation mit der Induktionsheizvorrichtung,
- Fig. 3: eine schematische Draufsicht auf einen Teil einer eine Werkzeuggreifereinheit ausbildende Abschirmeinheit der Induktionsheizvorrichtung,
- Fig. 4: ein schematisches Ablaufdiagramm eines Verfahrens mit der Induktionsheizvorrichtung,
- Fig. 5: ein schematisches Ablaufdiagramm eines Verfahrens mit der Ein- und/oder Ausschrumpfspannstation zu einem Einschrumpfen eines Werkzeugs in eine Werkzeugaufnahme und zu einem Ausschrumpfen eines Werkzeugs in eine Werkzeugaufnahme,
- Fig. 6: eine schematische Draufsicht auf einen Teil einer eine alternative Werkzeuggreifereinheit ausbildenden alternativen Abschirmeinheit einer alternativen Induktionsheizvorrichtung,
- Fig. 7: eine schematische Seitenansicht auf einen Teil der die alternative Werkzeuggreifereinheit ausbildenden alternativen Abschirmeinheit,
- Fig. 8: eine schematische Draufsicht auf einen Teil einer eine zweite alternative Werkzeuggreifereinheit ausbildende zweite alternative Abschirmeinheit einer zweiten alternativen Induktionsheizvorrichtung,
- Fig. 9: eine schematische Draufsicht auf einen Teil einer eine dritte alternative Werkzeuggreifereinheit ausbildende dritte alternative Abschirmeinheit einer dritten alternativen Induktionsheizvorrichtung und
- Fig. 10: eine schematische Seitenansicht auf einen Teil der die dritte alternative Werkzeuggreifereinheit ausbildenden dritten alternativen Abschirmeinheit.

### Beschreibung der Ausführungsbeispiele

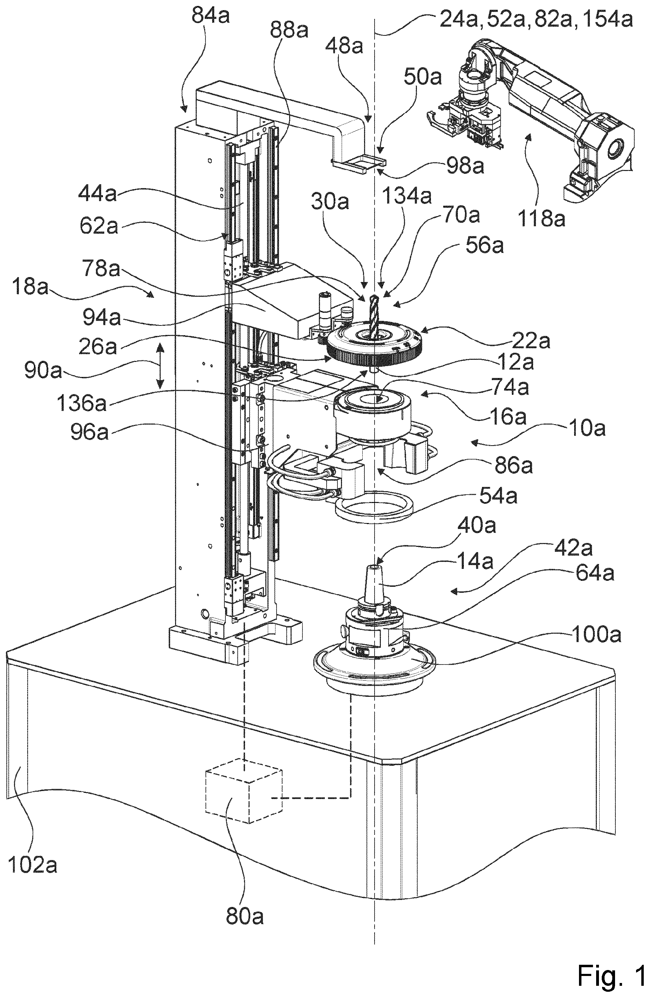

Fig. 1 zeigt eine Ein- und/oder Ausschrumpfspannstation 18a. Die Ein- und/oder Ausschrumpfspannstation 18a ist zu einem automatisierten Ein- und/oder Ausschrumpfen von Werkzeugen 12a in und/oder aus Werkzeugaufnahmen 14a vorgesehen. Die Ein- und/oder Ausschrumpfspannstation 18a ist zu einer Durchführung eines Einschrumpfvorgangs an Werkzeugen 12a zur Befestigung der Werkzeuge 12a in Werkzeugaufnahmen 14a und/oder zu einer Durchführung eines Ausschrumpfvorgangs an Werkzeugen 12a zur Entnahme der Werkzeuge 12a aus Werkzeugaufnahmen 14a vorgesehen. Die Ein- und/oder Ausschrumpfspannstation 18a weist eine Induktionsheizvorrichtung 10a auf. Die Induktionsheizvorrichtung 10a ist zu einem Erhitzen der Werkzeugaufnahmen 14a vorgesehen. Die Werkzeugaufnahmen 14a sind als Schrumpfspannfutter ausgebildet. Die Werkzeugaufnahmen 14a weisen Werkzeugaufnahmeöffnungen 40a auf. Die Werkzeuge 12a sind als Schaftwerkzeuge ausgebildet. Die Werkzeuge 12a weisen einem Werkzeugschaft 76a auf. Die Werkzeuge 12a weisen einen Arbeitsbereich 78a auf. Die Werkzeugaufnahmeöffnungen 40a der Werkzeugaufnahmen 14a sind dazu vorgesehen, den Werkzeugschaft 76a eines Werkzeugs 12a aufzunehmen. Vorzugsweise ist der Werkzeugschaft 76a in einem in die Werkzeugaufnahme 14a eingespannten Zustand nahezu vollständig, insbesondere bis auf einen höchstens 5 mm, vorzugsweise höchstens 3 mm, bevorzugt höchstens 2 mm messenden Bereich in die Werkzeugaufnahmeöffnung 40a der Werkzeugaufnahme 14a eingesteckt.

Die Induktionsheizvorrichtung 10a weist eine Induktionsheizeinheit 16a auf. Die Induktionsheizeinheit 16a ist dazu vorgesehen, die Werkzeugaufnahmeöffnung 40a der Werkzeugaufnahme 14a bei dem Einschrumpfvorgang und/oder bei dem Ausschrumpfvorgang durch ein Erhitzen aufzuweiten. Die Induktionsheizeinheit 16a weist eine Induktionsspule 20a auf. Die Induktionsheizeinheit 16a ist dazu vorgesehen, ein Induktionsmagnetfeld zu erzeugen. Das Induktionsmagnetfeld ist dazu vorgesehen, mit dem Material der Werkzeugaufnahme 14a zu einer Erhitzung und damit zu einer Aufweitung der Werkzeugaufnahme 14a wechselzuwirken. Die Induktionsspule 20a weist eine Öffnung 74a auf. Die Öffnung 74a der Induktionsspule 20a ist parallel zu einer Axialrichtung 24a der Ein- und/oder Ausschrumpfspannstation 18a ausgerichtet. Die Induktionsspule 20a umfasst Spulenwicklungen, welche um die Öffnung 74a der Induktionsspule 20a gewickelt sind. Die Ein- und/oder Ausschrumpfspannstation 18a weist eine Steuer- und/oder Regeleinheit 80a auf. Die Steuer- und/oder Regeleinheit 80a ist zumindest dazu vorgesehen, eine Beaufschlagung der Induktionsspule 20a mit Wechselstrom zu einer Erzeugung eines Induktionsmagnetfelds zu beaufschlagen. Die Induktionsheizeinheit 16a umfasst eine Kühleinheit 86a. Die Kühleinheit 86a ist unterhalb der Induktionsspule 20a angeordnet. Die Kühleinheit 86a ist zu einer Kühlung der Werkzeugaufnahme 14a im Anschluss an ein Einsetzen eines Werkzeugs 12a in die Werkzeugaufnahme 14a und/oder im Anschluss an ein Entnehmen eines Werkzeugs 12a aus der Werkzeugaufnahme 14a vorgesehen.

Die Induktionsheizvorrichtung 10a weist eine Abschirmeinheit 22a auf. Die Abschirmeinheit 22a ist dazu vorgesehen, das durch die Induktionsheizeinheit 16a erzeugte Induktionsmagnetfeld zumindest in einer Axialrichtung 24a der Induktionsspule 20a abzuschirmen. Die Axialrichtung 24a der Induktionsspule 20a erstreckt sich entlang eines Zentrums der Öffnung 74a der Induktionsspule 20a. Die Axialrichtung 24a der Induktionsspule 20a entspricht einer Axialrichtung 24a der Abschirmeinheit 22a. Die Axialrichtung 24a der Induktionsspule 20a entspricht einer Axialrichtung 24a einer in der Ein- und/oder Ausschrumpfspannstation 18a positionierten Werkzeugaufnahme 14a. Die Axialrichtung 24a der Induktionsspule 20a entspricht einer Axialrichtung 24a eines in einer in der Ein- und/oder Ausschrumpfspannstation 18a positionierten Werkzeugaufnahme 14a befestigten Werkzeugs 12a. Die Abschirmeinheit 22a ist entlang einer Vertikalachse 82a der Ein- und/oder Ausschrumpfspannstation 18a oberhalb der Induktionsheizeinheit 16a angeordnet. Die Abschirmeinheit 22a ist dazu vorgesehen, das Induktionsmagnetfeld der Induktionsheizeinheit 16a in Richtung der Vertikalachse 82a nach oben abzuschirmen.

Die Abschirmeinheit 22a umfasst eine Anordnung von beweglich gelagerten Abschirmelementen 28a. Die beweglich gelagerten Abschirmelemente 28a sind derart zueinander bewegbar, dass sie den Werkzeugschaft 76a eines Werkzeugs 12a möglichst komplett umschießen können und somit einen möglichst hohen Abschirmungsgrad erzeugen können. Die beweglich gelagerten Abschirmelemente 28a sind derart relativ zueinander verschiebbar, dass sie eine zumindest im Wesentlichen geschlossene Abschirmebene mit einer variablen Öffnung 32a zur Aufnahme von Werkzeugen 12a mit verschiedenen Durchmessern, ausbilden. Die durch die Abschirmelemente 28a gebildete variable Öffnung 32a ist zentral in der Abschirmebene, insbesondere der Abschirmeinheit 22a angeordnet. Die Axialrichtung 24a verläuft zentral durch die durch die Abschirmelemente 28a gebildete variable Öffnung 32a. Die Abschirmelemente 28a sind aus einem weichmagnetischen Material ausgebildet. Die Abschirmelemente 28a sind aus einem elektrisch nichtleitenden Material ausgebildet. Die Abschirmelemente 28a sind aus einem weichmagnetischen Ferritwerkstoff ausgebildet.

Die Abschirmeinheit 22a bildet zugleich eine Werkzeuggreifereinheit 26a aus. Die Abschirmeinheit 22a und die Werkzeuggreifereinheit 26a sind einstückig miteinander ausgebildet. Die Werkzeuggreifereinheit 26a ist dazu vorgesehen, ein Werkzeug 12a zur Durchführung eines Einschrumpfvorgangs in eine Werkzeugaufnahme 14a einzusetzen. Die Werkzeuggreifereinheit 26a ist dazu vorgesehen, ein Werkzeug 12a zu einer Durchführung eines Ausschrumpfvorgangs aus der Werkzeugaufnahme 14a zu entnehmen. Die Werkzeuggreifereinheit 26a ist dazu vorgesehen, das Werkzeug 12a innerhalb der Ein- und/oder Ausschrumpfspannstation 18a ausschließlich entlang der Vertikalachse 82a zu bewegen. Die Werkzeuggreifereinheit 26a ist dazu vorgesehen, bei einem Greifvorgang das Werkzeug 12a zu allen Seiten zu umschließen. Die Werkzeuggreifereinheit 26a ist dazu vorgesehen, das Werkzeug 12a mittels einer Erzeugung eines Kraftschlusses zu greifen.

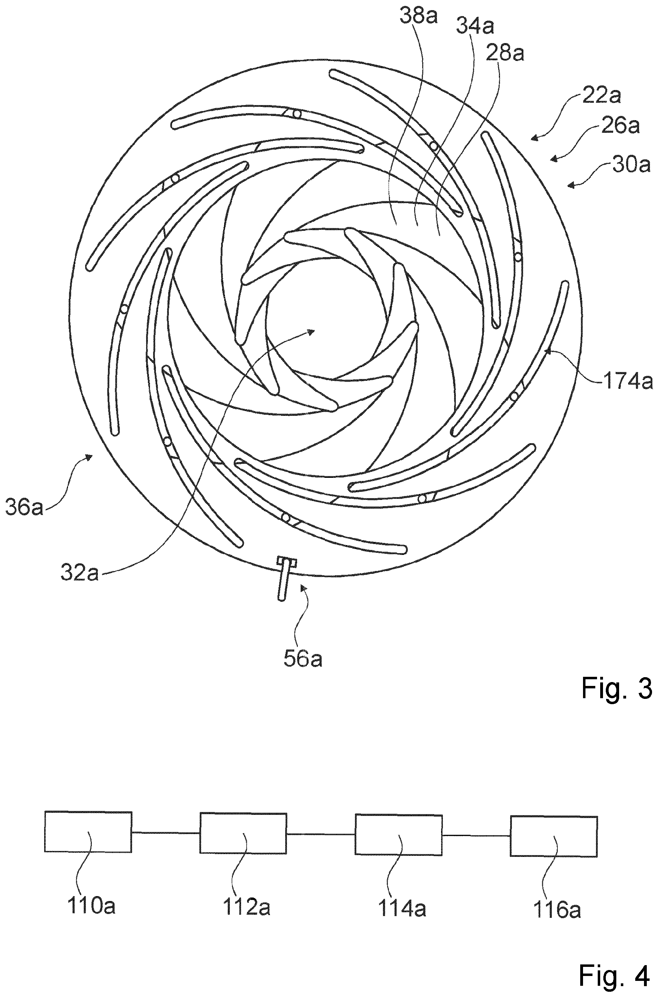

Die beweglich gelagerten Abschirmelemente 28a bilden einen Werkzeuggreifer 30a der Werkzeuggreifereinheit 26a aus. Die Abschirmelemente 28a sind dazu vorgesehen, eine senkrecht zu der Axialrichtung 24a wirkende Haltekraft auf ein Werkzeug 12a auszuüben. Die beweglich gelagerten Abschirmelemente 28a sind mittels einer nicht näher dargestellten Antriebsvorrichtung automatisiert bewegbar. Die Steuer- und/oder Regeleinheit 80a ist dazu vorgesehen, eine Bewegung der beweglich gelagerten Abschirmelemente 28a zu steuern. Die Induktionsheizvorrichtung 10a weist einen Lagermechanismus 56a auf. Die beweglich gelagerten Abschirmelemente 28a sind mittels des Lagermechanismus 56a automatisiert bewegbar. Die Steuer- und/oder Regeleinheit 80a ist dazu vorgesehen, die Werkzeuggreifereinheit 26a, insbesondere den durch die beweglich gelagerten Abschirmelemente 28a gebildeten Werkzeuggreifer 30a der Werkzeuggreifereinheit 26a zu steuern. Die Steuer- und/oder Regeleinheit 80a ist dazu vorgesehen, eine Greifbewegung des Werkzeuggreifers 30a zu steuern. Die beweglich gelagerten Abschirmelemente 28a bilden Lamellen 34a eines Lamellenverschlusses 36a aus (vgl. Fig. 3). Die beweglich gelagerten Abschirmelemente 28a bilden zumindest senkrecht zur Axialrichtung 24a verschiebbare Schieberelemente 38a aus. Der in der Fig. 3 beispielhaft gezeigte Lamellenverschluss 36a umfasst neun Lamellen 34a. Alternativ kann der Lamellenverschluss 36a eine größere oder kleinere Anzahl an Lamellen 34a aufweisen. Insbesondere entspricht eine Form der durch die Abschirmelemente 28a gebildeten variablen Öffnung 32a einem Vieleck, dessen Eckenzahl einer Lamellenzahl des Lamellenverschlusses 36a entspricht.

Die Ein- und/oder Ausschrumpfspannstation 18a weist eine Turmeinheit 84a auf. Die Turmeinheit 84a, insbesondere eine Haupterstreckungsrichtung 90a der Turmeinheit 84a, erstreckt sich parallel zu der Vertikalachse 82a der Ein- und/oder Ausschrumpfspannstation 18a. Die Abschirmeinheit 22a ist an der Turmeinheit 84a beweglich gelagert. Die Abschirmeinheit 22a umfasst einen Schlitten 94a. Der Schlitten 94a der Abschirmeinheit 22a ist zu der beweglichen Lagerung der Abschirmeinheit 22a an der Turmeinheit 84a vorgesehen. Vorzugsweise umfasst die Abschirmeinheit 22a zumindest zwei Schlitten 94a, wodurch vorteilhaft eine besonders hohe Präzision der Bewegung der Abschirmeinheit 22a erreicht werden kann. Die Abschirmeinheit 22a ist entlang der Haupterstreckungsrichtung 90a der Turmeinheit 84a an der Turmeinheit 84a auf- und abbewegbar. Die Abschirmeinheit 22a ist CNC-gesteuert an der Turmeinheit 84a auf- und abbewegbar. Die Steuer- und/oder Regeleinheit 80a ist dazu vorgesehen, die Bewegung der Abschirmeinheit 22a entlang der Turmeinheit 84a zu steuern. Die Induktionsheizeinheit 16a ist an der Turmeinheit 84a beweglich gelagert. Die Induktionsheizeinheit 16a umfasst einen Schlitten 96a. Der Schlitten 96a der Induktionsheizeinheit 16a ist zu der beweglichen Lagerung der Induktionsheizeinheit 16a an der Turmeinheit 84a vorgesehen. Vorzugsweise umfasst die Induktionsheizeinheit 16a zumindest zwei Schlitten 96a, wodurch vorteilhaft eine besonders hohe Präzision der Bewegung der Induktionsheizeinheit 16a erreicht werden kann. Die Induktionsheizeinheit 16a ist entlang der Haupterstreckungsrichtung 90a der Turmeinheit 84a an der Turmeinheit 84a auf- und abbewegbar. Die Induktionsheizeinheit 16a ist CNC-gesteuert an der Turmeinheit 84a auf- und abbewegbar. Die Steuer- und/oder Regeleinheit 80a ist dazu vorgesehen, die Bewegung der Induktionsheizeinheit 16a entlang der Turmeinheit 84a zu steuern. Die Turmeinheit 84a umfasst zumindest eine Führungseinheit 62a mit zumindest einer Führungsschiene 88a zu einer Führung einer Bewegung der Induktionsheizeinheit 16a und/oder der Abschirmeinheit 22a auf. Vorzugsweise weist die Führungseinheit 62a zwei parallel entlang der Haupterstreckungsrichtung 90a der Turmeinheit 84a verlaufende Führungsschienen 88a auf. Dadurch kann vorteilhaft eine besonders lineare Bewegungsführung erreicht werden.

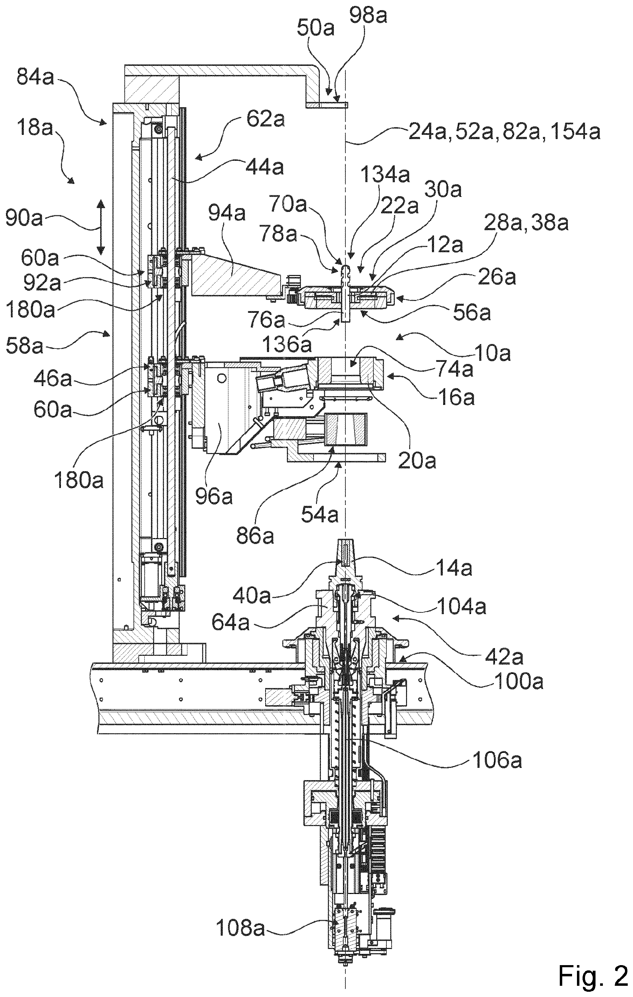

Die Induktionsheizeinheit 16a und die Abschirmeinheit 22a sind betriebsmäßig voneinander entkoppelbar. Die Induktionsheizeinheit 16a und die Abschirmeinheit 22a bilden entlang der Axialrichtung 24a relativ zueinander bewegbare Baueinheiten aus. Die Induktionsheizeinheit 16a und die Abschirmeinheit 22a bilden entlang der Axialrichtung 24a voneinander unabhängig bewegbare Baueinheiten aus. Die Ein- und/oder Ausschrumpfspannstation 18a umfasst eine Antriebswelle 44a (siehe Fig. 2). Die Antriebswelle 44a ist zumindest zu einem Großteil in der Turmeinheit 84a angeordnet. Die Antriebswelle 44a ist dazu vorgesehen, mit der Werkzeuggreifereinheit 26a, insbesondere der Abschirmeinheit 22a, zu koppeln. Die Antriebswelle 44a ist dazu vorgesehen, mit der Induktionsheizeinheit 16a zu koppeln. Die Werkzeuggreifereinheit 26a, insbesondere die Abschirmeinheit 22a und die Induktionsheizeinheit 16a sind unabhängig voneinander mit der Antriebswelle 44a koppelbar. In dem mit der Antriebswelle 44a gekoppelten Zustand bewegt sind die Werkzeuggreifereinheit 26a und/oder die Induktionsheizeinheit 16a bei einer Rotation der Antriebswelle 44a entlang der Axialrichtung 24a auf- oder abwärts, je nach Rotationsrichtung der Antriebswelle 44a. Die Antriebswelle 44a ist dazu vorgesehen, zur voneinander unabhängigen Einstellung der axialen Positionen der Induktionsheizeinheit 16a und der Werkzeuggreifereinheit 26a mit der Induktionsheizeinheit 16a und mit der Werkzeuggreifereinheit 26a zu koppeln. Die Induktionsheizeinheit 16a ist über ein Rollringgetriebe 46a mit der Antriebswelle 44a koppelbar. Die Werkzeuggreifereinheit 26a ist über ein weiteres Rollringgetriebe 92a mit der Antriebswelle 44a koppelbar. Die Rollringgetriebe 46a, 92a bilden zusammen mit der Antriebswelle 44a jeweils einen Uhing-Antrieb aus. Die Rollringgetriebe 46a, 92a weisen jeweils zumindest eine Uhing-Mutter 180a auf. Zu einer Kopplung der Induktionsheizeinheit 16a mit der Antriebswelle 44a wird die dem Rollringgetriebe 46a der Induktionsheizeinheit 16a zugeordnete Uhing-Mutter 180a auf die Antriebswelle 44a geklemmt, beispielsweise mechanisch, pneumatisch oder hydraulisch. Zu einer Kopplung der Werkzeuggreifereinheit 26a mit der Antriebswelle 44a wird die dem Rollringgetriebe 92a der Werkzeuggreifereinheit 26a zugeordnete Uhing-Mutter 180a auf die Antriebswelle 44a geklemmt, beispielsweise mechanisch, pneumatisch oder hydraulisch.

Die Ein- und/oder Ausschrumpfspannstation 18a weist ein Positionsbestimmungssystem 58a auf. Das Positionsbestimmungssystem 58a ist dazu vorgesehen, eine exakte Position der Werkzeuggreifereinheit 26a entlang der Axialrichtung 24a bzw. entlang der Führungseinheit 62a zu bestimmen. Das Positionsbestimmungssystem 58a ist dazu vorgesehen, eine exakte Position der Induktionsheizeinheit 16a entlang der Axialrichtung 24a bzw. entlang der Führungseinheit 62a zu bestimmen. Das Positionsbestimmungssystem 58a umfasst jeweils einen Lesekopf 60a, welcher dazu vorgesehen ist, eine Position der Induktionsheizeinheit 16a und/oder der Werkzeuggreifereinheit 26a auf der Antriebswelle 44a, insbesondere mittels eines gemeinsamen Messlineals, abzulesen. Die Leseköpfe 60a sind entlang der Antriebswelle 44a bewegbar.

Die Ein- und/oder Ausschrumpfspannstation 18a weist eine Längeneinstelleinheit 48a auf. Die Längeneinstelleinheit 48a ist dazu vorgesehen, ein Werkzeug 12a während des Einschrumpfvorgangs auf Länge einzustellen. Die Längeneinstelleinheit 48a weist eine Sensoreinheit 50a auf. Die Sensoreinheit 50a ist als eine optische Sensoreinheit 50a ausgebildet. Die Sensoreinheit 50a ist als eine Laser-Lichtschranke ausgebildet. Die Sensoreinheit 50a ist entlang einer Axialbewegungsrichtung 52a der Werkzeuggreifereinheit 26a angeordnet. Die Axialbewegungsrichtung 52a verläuft auf der Vertikalachse 82a der Ein- und/oder Ausschrumpfspannstation 18a. Die Sensoreinheit 50a ist zu einer Bestimmung einer Referenzlänge eines einzuschrumpfenden Werkzeugs 12a vorgesehen. Die Sensoreinheit 50a ist ortsfest mit der Turmeinheit 84a verbunden. Die Sensoreinheit 50a ist entlang der Vertikalachse 82a oberhalb der Induktionsheizeinheit 16a angeordnet. Die Sensoreinheit 50a ist entlang der Vertikalachse 82a oberhalb der Werkzeuggreifereinheit 26a angeordnet. Die Sensoreinheit 50a ist an einem oberen Ende der Turmeinheit 84a angeordnet. Die Sensoreinheit 50a bildet einen Sensorbereich 98a aus. Die Sensoreinheit 50a ist dazu vorgesehen eine Präsenz eines Teils des Werkzeugs 12a innerhalb des Sensorbereichs 98a zu detektieren. Die Sensoreinheit 50a ist dazu vorgesehen, bei einer Detektion einer Präsenz eines Teils des Werkzeugs 12a innerhalb des Sensorbereichs 98a ein Detektionssignal an die Steuer- und/oder Regeleinheit 80a auszusenden.

Die Ein- und/oder Ausschrumpfspannstation 18a weist eine Haltevorrichtung 42a auf. Die Haltevorrichtung 42a ist zu einer Halterung einer Werkzeugaufnahme 14a in der Ein- und/oder Ausschrumpfspannstation 18a vorgesehen. Die Haltevorrichtung 42a umfasst eine Spindeleinheit 100a. Die Spindeleinheit 100a ist rotierbar. Die Spindeleinheit 100a ist fest mit einer Basiseinheit 102a der Ein- und/oder Ausschrumpfspannstation 18a verbunden. Die Haltevorrichtung 42a umfasst einen Vorsatzhalter 64a. Der Vorsatzhalter 64a ist austauschbar in die Spindeleinheit 100a einsetzbar. Der Vorsatzhalter 64a ist dazu vorgesehen eine passenden Aufnahmebereich 104a für einen bestimmten Werkzeugaufnahmetyp bereitzustellen. Die Haltevorrichtung 42a umfasst einen Längeneinstellpin 106a. Der Längeneinstellpin 106a ist entlang der Vertikalachse 82a bewegbar. Die Ein- und/oder Ausschrumpfspannstation 18a weist eine Antriebseinheit 108a mit einer Rutschkupplung und einem Messsystem (nicht gezeigt) auf, welche dazu vorgesehen ist, eine messgenaue Positionierung und/oder Bewegung des Längeneinstellpins 106a zu ermöglichen. Die Werkzeugaufnahmeöffnung 40a der Werkzeugaufnahme 14a erstreckt sich entlang der Axialrichtung 24a der Werkzeugaufnahme 14a durch die komplette Werkzeugaufnahme 14a. Der Längeneinstellpin 106a ist durch die Werkzeugaufnahmeöffnung 40a der Werkzeugaufnahme 14a bewegbar. Der Längeneinstellpin 106a ist dazu vorgesehen, einen Anschlag für ein in die Werkzeugaufnahmeöffnung 40a der Werkzeugaufnahme 14a eingesetztes Werkzeug 12a auszubilden. Dadurch kann vorteilhaft bei einer Kenntnis der Längen des Werkzeugs 12a und der Werkzeugaufnahmeöffnung 40a eine gewünschte Einschrumpf- und/oder Spanntiefe vorgegeben werden.

Die Längeneinstelleinheit 48a weist eine weitere Sensoreinheit 54a auf. Die weitere Sensoreinheit 54a ist als eine Laser-Lichtschranke ausgebildet. Die weitere Sensoreinheit 54a ist in einem betriebsbereiten Zustand fest mit der Induktionsheizeinheit 16a gekoppelt. Die weitere Sensoreinheit 54a ist entlang der Vertikalachse 82a unterhalb der Induktionsheizeinheit 16a angeordnet. Die weitere Sensoreinheit 54a ist mit der Induktionsheizeinheit 16a mitbewegbar. Die weitere Sensoreinheit 54a ist dazu vorgesehen, eine Position einer Werkzeugaufnahme 14a, insbesondere der Werkzeugaufnahmeöffnung 40a der Werkzeugaufnahme 14a auf der Vertikalachse 82a zu ermitteln. Die Sensoreinheit 54a ist dazu vorgesehen, eine Position des Längeneinstellpins 106a zu ermitteln. Zu einer Ermittlung der Position des Längeneinstellpins 106a wird der Längeneinstellpin 106a komplett durch die Werkzeugaufnahmeöffnung 40a geschoben, bis der Längeneinstellpin 106a in Richtung der Vertikalachse 82a gesehen oberhalb der Werkzeugaufnahme 14a aus der Werkzeugaufnahme 14a heraussteht. Eine relative Positionierung der Werkzeuggreifereinheit 26a und der Haltevorrichtung 42a zueinander ist, abgesehen von der relativen Positionierung entlang der gemeinsamen Axialrichtung 24a der Werkzeuggreifereinheit 26a und der Haltevorrichtung 42a, während des gesamten Einschrumpfvorgangs und/oder während des gesamten Ausschrumpfvorgangs konstant. Eine relative Positionierung der Werkzeuggreifereinheit 26a und der Werkzeugaufnahme 14a zueinander ist, abgesehen von der relativen Positionierung entlang der gemeinsamen Axialrichtung 24a der Werkzeuggreifereinheit 26a und der Werkzeugaufnahme 14a, während des gesamten Einschrumpfvorgangs und/oder während des gesamten Ausschrumpfvorgangs konstant. Eine relative Positionierung der Werkzeuggreifereinheit 26a und der Induktionsheizeinheit 16a zueinander ist, abgesehen von der relativen Positionierung entlang der gemeinsamen Axialrichtung 24a der Werkzeuggreifereinheit 26a und der Induktionsheizeinheit 16a, während des gesamten Einschrumpfvorgangs und/oder während des gesamten Ausschrumpfvorgangs konstant.

Die Ein- und/oder Ausschrumpfspannstation 18a weist einen Handhabungsroboter 118a auf. Der Handhabungsroboter 118a ist als ein mehrachsiger Industrieroboter ausgebildet. Der Handhabungsroboter 118a ist dazu vorgesehen, die Werkzeugaufnahme 14a in den Vorsatzhalter 64a und/oder in die Spindeleinheit 100a einzusetzen und/oder zu entnehmen. Der Handhabungsroboter 118a ist dazu vorgesehen das Werkzeug 12a in die Ein- und/oder Ausschrumpfspannstation 18a einzugeben und/oder das Werkzeug 12a aus der Ein- und/oder Ausschrumpfspannstation 18a zu entnehmen. Der Handhabungsroboter 118a ist dazu vorgesehen, das Werkzeug 12a an die Werkzeuggreifereinheit 26a zu übergeben und/oder das Werkzeug 12a von der Werkzeuggreifereinheit 26a zu übernehmen. Alternativ kann die durch den Handhabungsroboter 118 vornehmbare Bestückung und/oder Entnahme auch manuell durch einen Bediener erfolgen.

Fig. 4 zeigt ein Ablaufdiagramm eines Verfahrens mit der Induktionsheizvorrichtung 10a. In zumindest einem Verfahrensschritt 110a wird die Induktionsheizeinheit 16a auf eine Werkzeugaufnahme 14a, in der ein Werkzeug 12a befestigt ist, aufgesetzt. In zumindest einem weiteren Verfahrensschritt 112a werden die beweglich gelagerten Abschirmelemente 28a der Abschirmeinheit 22a dazu verwendet, das Werkzeug 12a zu greifen. In dem Verfahrensschritt 112a wird in dem Betriebszustand, in dem die Induktionsheizeinheit 16a auf die Werkzeugaufnahme 14a aufgesetzt ist, das in die Werkzeugaufnahme 14a eingesetzte Werkzeug 12a von der Werkzeuggreifereinheit 26a in einem Nahbereich der Werkzeugaufnahmeöffnung 40a der Werkzeugaufnahme 14a gegriffen. In zumindest einem weiteren Verfahrensschritt 114a wird die Werkzeugaufnahme 14a durch die Induktionsheizeinheit 16a erwärmt. Durch die Erwärmung wird die Werkzeugaufnahmeöffnung 40a der Werkzeugaufnahme 14a aufgeweitet, so dass die Haltekraft, die das Werkzeug 12a in der Werkzeugaufnahmeöffnung 40a befestigt, gelockert wird. In zumindest einem weiteren Verfahrensschritt 116a wird das in dem Nahbereich der Werkzeugaufnahmeöffnung 40a der Werkzeugaufnahme 14a gegriffene Werkzeug 12a mittels einer Bewegung der Werkzeuggreifereinheit 26a entlang der Vertikalachse 82a aus der Werkzeugaufnahmeöffnung 40a entnommen.

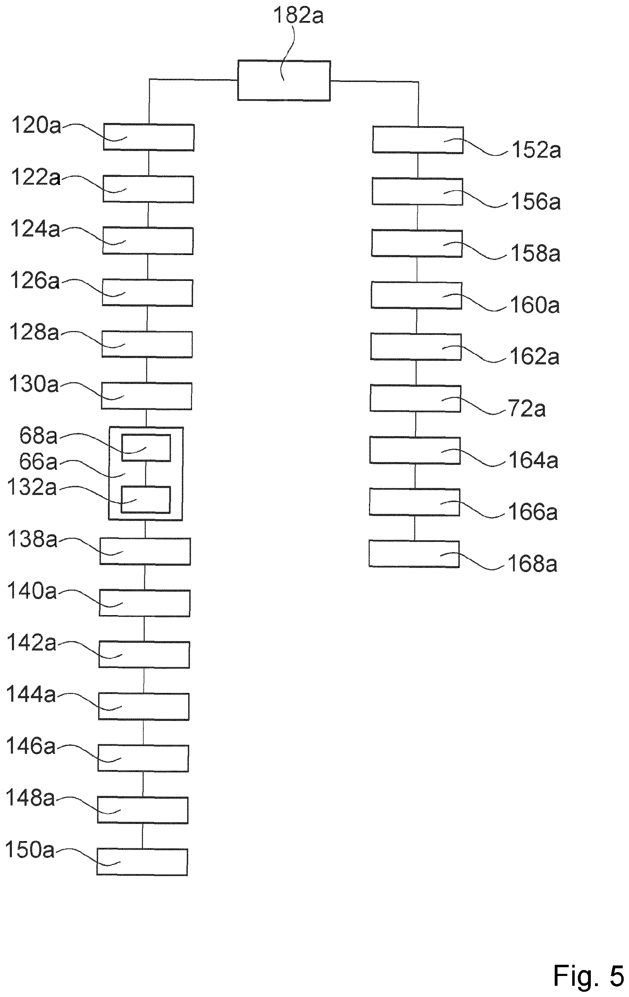

Fig. 5 zeigt ein Ablaufdiagramm eines Verfahrens mit der Ein- und/oder Ausschrumpfspannstation 18a. Ausgehend von einem Ausgangszustand 182a ist die Ein- und/oder Ausschrumpfspannstation 18a dazu vorgesehen, einen Einschrumpfvorgang, gegebenenfalls inklusive einer Längeneinstellung (linke Seite von Fig. 5) oder einen Ausschrumpfvorgang (rechte Seite von Fig. 5) vorzunehmen. Bei dem Einschrumpfvorgang wird in zumindest einem Verfahrensschritt 120a die Werkzeugaufnahme 14a in die Haltevorrichtung 42a, insbesondere in den Vorsatzhalter 64a eingesetzt. Das Einsetzen kann hierbei manuell durch einen Bediener oder durch den Handhabungsroboter 118a vorvorgenommen werden. In zumindest einem weiteren Verfahrensschritt 122a wird der Werkzeugaufnahmetyp durch einen Bediener eingegeben oder automatisch durch Auslesen einer Codierung, beispielsweise eines QR-Codes, eines Strichcodes oder eines RFID-Chips, oder durch eine Bilderkennung eines Kamerasystems detektiert. In zumindest einem weiteren Verfahrensschritt 124a wird aus dem Werkzeugaufnahmetyp eine Länge der Werkzeugaufnahme 14a, ein Durchmesser der Werkzeugaufnahmeöffnung 40a und/oder eine ideale Einschrumpf- und/oder Spanntiefe ermittelt.

Alternativ oder zusätzlich kann in zumindest einem Verfahrensschritt 126a eine Länge der Werkzeugaufnahme 14a mittels der weiteren Sensoreinheit 54a ermittelt werden. Zusätzlich kann in dem Verfahrensschritt 126a eine Kalibration der Position des Längeneinstellpins 106a ermittelt werden, indem der Längeneinstellpin 106a komplett durch die Werkzeugaufnahmeöffnung 40a geschoben und von der weiteren Sensoreinheit 54a detektiert wird.

In zumindest einem weiteren Verfahrensschritt 128a wird die Induktionsheizeinheit 16a CNC-gesteuert durch ein Verfahren entlang der Vertikalachse 82a auf eine Höhe eines zu erhitzenden Bereichs der Werkzeugaufnahme 14a positioniert. In zumindest einem weiteren Verfahrensschritt 130a wird die durch die Abschirmeinheit 22a gebildete Werkzeuggreifereinheit 26a CNC-gesteuert durch ein Verfahren entlang der Vertikalachse 82a oberhalb eines Auslaufs der Werkzeugaufnahme 14a positioniert. Dabei wird die Werkzeuggreifereinheit 26a etwas in einem Abstand einer vorgesehenen Einschrumpf- und/oder Spanntiefe (plus einer Dicke der den Werkzeuggreifer 30a ausbildenden Abschirmelemente 28a) von der Induktionsheizeinheit 16a positioniert. In zumindest einem Teilverfahrensschritt 68a eines Längeneinstellschritts 66a wird das Werkzeug 12a von dem Bediener oder von dem Handhabungsroboter 118a in den geöffneten Werkzeuggreifer 30a eingesetzt. In dem Längeneinstellschritt 66a wird zu einer Ermittlung der vorgesehenen Einschrumpf- und/oder Spanntiefe das Werkzeug 12a auf die noch unaufgeweitete Werkzeugaufnahme 14a, insbesondere auf die unaufgeweitete Werkzeugaufnahmeöffnung 40a, aufgestellt. Dabei wird das Werkzeug 12a durch die Auflage auf der Werkzeugaufnahme 14a, welche idealerweise eine Einführphase aufweist, vorzentriert. Dadurch wird eine Position eines ersten Endes 136a des Werkzeugs 12a bestimmt. In einem weiteren Teilverfahrensschritt 132a des Längeneinstellschritts 66a wird das Werkzeug 12a von dem Werkzeuggreifer 30a in einem Nahbereich des Arbeitsbereichs 78a des Werkzeugs 12a gegriffen und entlang der Axialrichtung 24a, insbesondere entlang der der Vertikalachse 82a nach oben, bewegt bis eine Spitze 70a des Werkzeugs 12a von der Sensoreinheit 50a erfasst wird. Dadurch wird eine Position eines zweiten Endes 134a des Werkzeugs 12a bestimmt. In zumindest einem weiteren Verfahrensschritt 138a wird durch die Steuer- und/oder Regeleinheit 80a anhand der Positionen des ersten Endes 136a und des zweiten Endes 134a des Werkzeugs 12a sowie des durch die Werkzeuggreifereinheit 26a zurückgelegten Verfahrwegs eine Länge des Werkzeugs 12a bestimmt. Aus der Länge des Werkzeugs 12a wird in dem Verfahrensschritt 138a durch die Steuer- und/oder Regeleinheit 80a die ideale Einschrumpf- und/oder Spanntiefe des Werkzeugs 12a in der Werkzeugaufnahme 14a ermittelt.

In zumindest einem weiteren Verfahrensschritt 140a wird die Werkzeugaufnahme 14a von der Induktionsheizeinheit 16a erhitzt und dadurch die Werkzeugaufnahmeöffnung 40a aufgeweitet. Dabei wird die Einstellung des Induktionsmagnetfelds und/oder der Erhitzungsdauer auf Basis der ermittelten oder ausgelesenen Daten der Werkzeugaufnahme 14a vorgenommen. In zumindest einem weiteren Verfahrensschritt 142a wird das Werkzeug 12a in die aufgeweitete Werkzeugaufnahmeöffnung 40a eingesetzt. Die Einschrumpf- und/oder Spanntiefe des Werkzeugs 12a wird dabei durch eine Vertikalbewegung der Werkzeuggreifereinheit 26a festgelegt. Alternativ oder zusätzlich kann die Kalibrierung des Längeneinstellpins 106a genutzt werden, um einen Anschlag für das in die Werkzeugaufnahme 14a eingesteckte Werkzeug 12a zu schaffen. Dazu wird in einem Verfahrensschritt 144a eine Position des mittels der weiteren Sensoreinheit 54a kalibrierten Längeneinstellpins 106a derart relativ zu der durch die weitere Sensoreinheit 54a bestimmte Länge der Werkzeugaufnahme 14a eingestellt, dass der durch den Längeneinstellpin 106a gebildete Anschlag genau bei der vorgesehenen Einschrumpf- und/oder Spanntiefe des Werkzeugs 12a liegt. In zumindest einem weiteren Verfahrensschritt 146a wird im Anschluss an das Einsetzen des Werkzeugs 12a in die Werkzeugaufnahme 14a der Werkzeuggreifer 30a geöffnet und die Werkzeuggreifereinheit 26a sowie die Induktionsheizeinheit 16a entlang der Vertikalachse 82a nach oben über die Spitze 70a des Werkzeugs 12a gefahren. In zumindest einem weiteren Verfahrensschritt 148a wird die noch warme Werkzeugaufnahme 14 durch die Kühleinheit 86a abgekühlt. In zumindest einem weiteren Verfahrensschritt 150a wird die Werkzeugaufnahme 14a und das Werkzeug 12a durch den Bediener oder durch den Handhabungsroboter 118a aus der Ein- und/oder Ausschrumpfspannstation 18a entnommen. Während dem gesamten oben beschriebenen Einschrumpfvorgang werden die Werkzeuggreifereinheit 26a und die Induktionsheizeinheit 16a ausschließlich entlang einer einzelnen Achse, insbesondere ausschließlich entlang einer vorgesehenen Rotationsachse 154a des einzuschrumpfenden Werkzeugs 12a verfahren.

Bei dem Ausschrumpfvorgang wird in zumindest einem Verfahrensschritt 152a eine Werkzugaufnahme mit einem darin eingespannten Werkzeug 12a durch den Bediener oder durch den Handhabungsroboter 118a in die Haltevorrichtung 42a eingesetzt. In zumindest einem weiteren Verfahrensschritt 156a wird die Induktionsheizeinheit 16a CNC-gesteuert durch ein Verfahren entlang der Vertikalachse 82a auf eine Höhe eines zu erhitzenden Bereichs der Werkzeugaufnahme 14a positioniert. In zumindest einem weiteren Verfahrensschritt 158a wird die durch die Abschirmeinheit 22a gebildete Werkzeuggreifereinheit 26a CNC-gesteuert durch ein Verfahren entlang der Vertikalachse 82a oberhalb eines Auslaufs der Werkzeugaufnahme 14a positioniert. In dem Verfahrensschritt 158a wird die Werkzeuggreifereinheit 26a derart positioniert, dass der Werkzeuggreifer 30a das Werkzeug 12a in dem Nahbereich der Werkzeugaufnahmeöffnung 40a greifen kann. In zumindest einem weiteren Verfahrensschritt 160a wird der Werkzeuggreifer 30a geschlossen. In zumindest einem weiteren Verfahrensschritt 162a wird eine Heizfunktion der Induktionsheizeinheit 16a aktiviert. In zumindest einem Werkzeugentnahmeschritt 72a wird bereits während einer Aufheizphase des Ausschrumpfvorgangs, in welchem die Werkzeugaufnahme 14a durch induktives Aufheizen aufgeweitet wird, mittels einer Werkzeuggreifereinheit 26a eine Entnahmezugkraft auf das Werkzeug 12a ausgeübt. In zumindest einem weiteren Verfahrensschritt 164a wird das Werkzeug 12a unmittelbar nachdem eine das Werkzeug 12a in der Werkzeugaufnahme 14a halternde Kraft die Entnahmezugkraft unterschreitet entlang der Vertikalachse 82a nach oben aus der Werkzeugaufnahmeöffnung 40a der Werkzeugaufnahme 14a entnommen. Dadurch kann vorteilhaft ein besonders schnelles und sicheres Demontieren von Werkzeugen 12a aus Werkzeugaufnahmen 14a erreicht werden, insbesondere auch wenn beispielsweise das Werkzeug 12a und die Werkzeugaufnahme 14a aus einem ähnlichen oder identischen Material ausgebildet sind (beispielsweise Schnellarbeitsstahl).

In zumindest einem weiteren Verfahrensschritt 166a werden die Werkzeuggreifereinheit 26a und die Induktionsheizeinheit 16a soweit entlang der Vertikalachse 82a nach oben gefahren, dass die mit der Induktionsheizeinheit 16a gekoppelte Kühleinheit 86a die Werkzeugaufnahme 14a kühlen kann. In zumindest einem weiteren Verfahrensschritt 168a wird das entnommene Werkzeug 12a und die ausreichend abgekühlte Werkzeugaufnahme 14a von dem Bediener oder von dem Handhabungsroboter 118a aus der Ein- und/oder Ausschrumpfspannstation 18a entnommen. Während dem gesamten oben beschriebenen Ausschrumpfvorgang werden die Werkzeuggreifereinheit 26a und die Induktionsheizeinheit 16a ausschließlich entlang einer einzelnen Achse, insbesondere ausschließlich entlang der vorgesehenen Rotationsachse 154a des auszuschrumpfenden Werkzeugs 12a, verfahren.

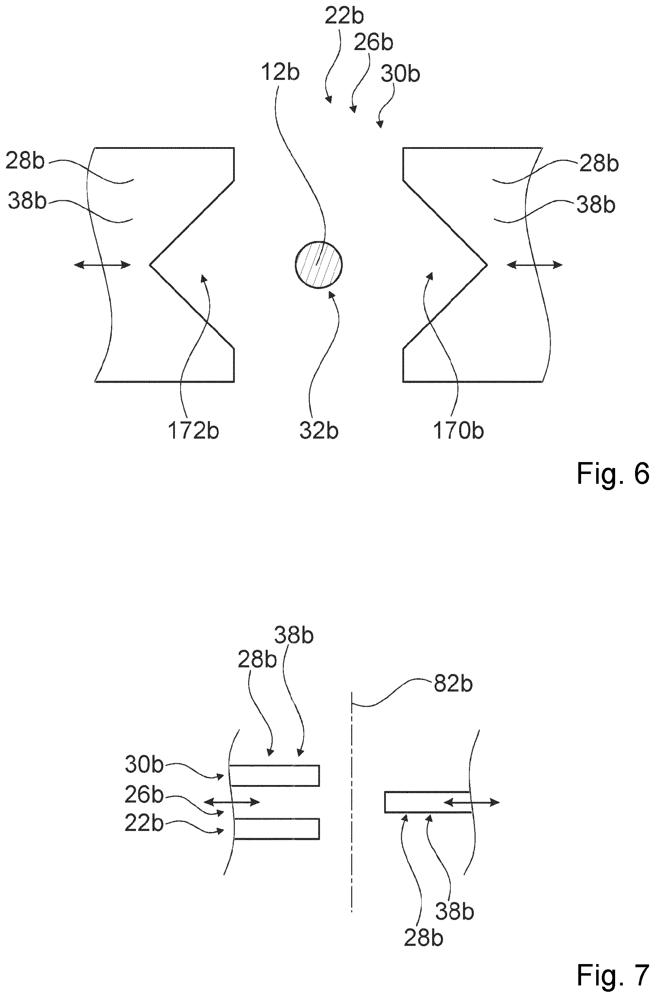

In den Figuren 6 bis 10 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In den Ausführungsbeispielen der Figuren 6 bis 10 ist der Buchstabe a durch die Buchstaben b bis d ersetzt

Figur 6 zeigt eine schematische Draufsicht auf einen Teil einer eine alternative Werkzeuggreifereinheit 26b ausbildenden alternativen Abschirmeinheit 22b einer alternativen Induktionsheizvorrichtung 10b einer alternativen Ein- und/oder Ausschrumpfspannstation 18b. Die Abschirmeinheit 22b umfasst zwei beweglich gelagerte Abschirmelemente 28b. Die beweglich gelagerten Abschirmelemente 28b bilden einen Werkzeuggreifer 30b der Werkzeuggreifereinheit 26b aus. Die beweglich gelagerten Abschirmelemente 28b bilden senkrecht zur Axialrichtung 24b verschiebbare Schieberelemente 38b aus. Die beweglich gelagerten Abschirmelemente 28b weisen in einer Draufsicht entlang der Vertikalachse 82b gesehen jeweils eine prismenförmige, insbesondere dreiecksförmige, Ausnehmung 170b, 172b auf. Die prismenförmigen, insbesondere dreiecksförmigen, Ausnehmungen 170b, 172b sind dazu vorgesehen, unterschiedliche Werkzeuge 12b mit unterschiedlichen Durchmessern zu umgreifen und gleichzeitig ein Induktionsmagnetfeld entlang der Vertikalachse 82b nach oben hin abzuschirmen. Die beweglich gelagerten Abschirmelemente 28b sind aufeinander zu bewegbar. Die beweglich gelagerten Abschirmelemente 28b sind dazu vorgesehen, in einer Betrachtungsrichtung entlang der Vertikalachse 82b einander zu überlappen.

Figur 7 zeigt eine schematische Seitenansicht auf einen Teil der die alternative Werkzeuggreifereinheit 26b ausbildenden alternativen Abschirmeinheit 22b. Eines der beweglich gelagerten Abschirmelemente 28b ist entlang der Vertikalachse 82a geschlitzt ausgebildet. Das gegenüberliegende Abschirmelement 28b ist ungeschlitzt ausgebildet. Das ungeschlitzt ausgebildete Abschirmelement 28b ist dazu vorgesehen, bei einem aufeinander zu Bewegen der Abschirmelemente 28b in das geschlitzt ausgebildete Abschirmelement 28b einzugreifen. Dadurch kann vorteilhaft ein Verkippen eines Werkzeugs 12b, welches von dem durch die Abschirmelemente 28b ausgebildeten Werkzeuggreifer 30b gehaltert wird, vermieden werden.

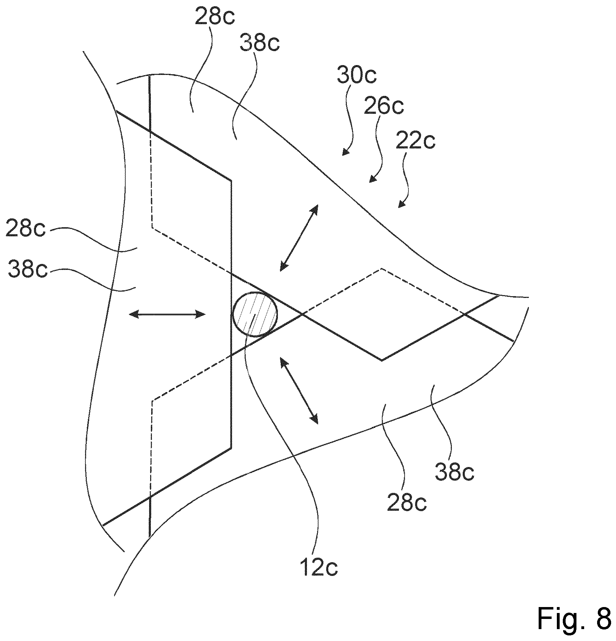

Figur 8 zeigt eine schematische Draufsicht auf einen Teil einer eine zweiten alternative Werkzeuggreifereinheit 26c ausbildenden zweiten alternativen Abschirmeinheit 22c einer zweiten alternativen Induktionsheizvorrichtung 10c einer zweiten alternativen Ein- und/oder Ausschrumpfspannstation 18c. Die Abschirmeinheit 22c umfasst drei beweglich gelagerte Abschirmelemente 28c. Die beweglich gelagerten Abschirmelemente 28c bilden einen Werkzeuggreifer 30c der Werkzeuggreifereinheit 26c aus. Die beweglich gelagerten Abschirmelemente 28c bilden senkrecht zur Axialrichtung 24c verschiebbare Schieberelemente 38c aus. Die beweglich gelagerten Abschirmelemente 28c weisen eine stumpfe Keilform auf. Die beweglich gelagerten Abschirmelemente 28c sind in regelmäßigen Abständen kreisförmig um ein Zentrum der Abschirmeinheit 22c angeordnet. Die beweglich gelagerten Abschirmelemente 28c sind aufeinander zu bewegbar. Die beweglich gelagerten Abschirmelemente 28c sind dazu vorgesehen, in einer Betrachtungsrichtung entlang der Vertikalachse 82c einander zu überlappen.

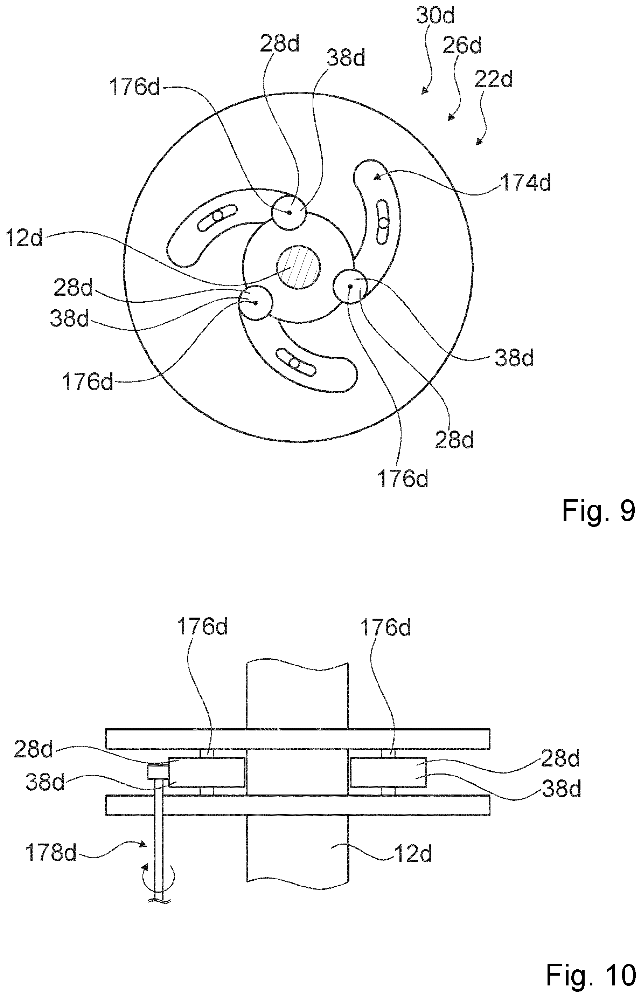

Figur 9 zeigt eine schematische Draufsicht auf einen Teil einer eine dritten alternative Werkzeuggreifereinheit 26d ausbildenden dritten alternativen Abschirmeinheit 22d einer dritten alternativen Induktionsheizvorrichtung 10d einer dritten alternativen Ein- und/oder Ausschrumpfspannstation 18d. Die Abschirmeinheit 22d umfasst drei beweglich gelagerte Abschirmelemente 28d. Die beweglich gelagerten Abschirmelemente 28d bilden einen Werkzeuggreifer 30d der Werkzeuggreifereinheit 26d aus. Die beweglich gelagerten Abschirmelemente 28d zumindest bilden senkrecht zur Axialrichtung 24d verschiebbare Schieberelemente 38d aus. Die Abschirmelemente 28d sind entlang gebogen ausgebildeten Kulissen 174d geführt. Die Abschirmelemente 28d sind rollenförmig ausgebildet. Die Abschirmelemente 28d sind jeweils um eine Rollenachse 176d rotierbar ausgebildet. Die Rollenachsen 176d verlaufen parallel zu einer Vertikalachse 82d der Ein- und/oder Ausschrumpfspannstation 18d. Die Abschirmeinheit 22d weist eine Antriebseinheit 178d auf. Die Antriebseinheit 178d ist dazu vorgesehen, eine Rotation zumindest eines rollenförmig ausgebildeten Abschirmelements 28d zu erzeugen. Die angetriebene Rotation des rollenförmig ausgebildeten Abschirmelements 28d ist dazu vorgesehen, ein durch das Abschirmelement 28d, insbesondere den Werkzeuggreifer 30d gehaltenes Werkzeug 12d zu rotieren..

### Bezugszeichen

- 10: Induktionsheizvorrichtung
- 12: Werkzeug
- 14: Werkzeugaufnahme
- 16: Induktionsheizeinheit
- 18: Ein- und/oder Ausschrumpfspannstation
- 20: Induktionsspule
- 22: Abschirmeinheit
- 24: Axialrichtung
- 26: Werkzeuggreifereinheit
- 28: Abschirmelement
- 30: Werkzeuggreifer
- 32: Öffnung
- 34: Lamelle
- 36: Lamellenverschluss
- 38: Schieberelement
- 40: Werkzeugaufnahmeöffnung
- 42: Haltevorrichtung
- 44: Antriebswelle
- 46: Rollringgetriebe
- 48: Längeneinstelleinheit
- 50: Sensoreinheit
- 52: Axialbewegungsrichtung
- 54: Weitere Sensoreinheit
- 56: Lagermechanismus
- 58: Positionsbestimmungssystem
- 60: Lesekopf
- 62: Führungseinheit
- 64: Vorsatzhalter
- 66: Längeneinstellschritt
- 68: Teilverfahrensschritt
- 70: Spitze
- 72: Werkzeugentnahmeschritt
- 74: Öffnung
- 76: Werkzeugschaft
- 78: Arbeitsbereich
- 80: Steuer- und/oder Regeleinheit
- 82: Vertikalachse
- 84: Turmeinheit
- 86: Kühleinheit
- 88: Führungsschiene
- 90: Haupterstreckungsrichtung
- 92: Rollringgetriebe
- 94: Schlitten
- 96: Schlitten
- 98: Sensorbereich
- 100: Spindeleinheit
- 102: Basiseinheit
- 104: Aufnahmebereich
- 106: Längeneinstellpin
- 108: Antriebseinheit
- 110: Verfahrensschritt
- 112: Verfahrensschritt
- 114: Verfahrensschritt
- 116: Verfahrensschritt
- 118: Handhabungsroboter
- 120: Verfahrensschritt
- 122: Verfahrensschritt
- 124: Verfahrensschritt
- 126: Verfahrensschritt
- 128: Verfahrensschritt
- 130: Verfahrensschritt
- 132: Teilverfahrensschritt
- 134: Ende
- 136: Ende
- 138: Verfahrensschritt
- 140: Verfahrensschritt
- 142: Verfahrensschritt
- 144: Verfahrensschritt
- 146: Verfahrensschritt
- 148: Verfahrensschritt
- 150: Verfahrensschritt
- 152: Verfahrensschritt
- 154: Rotationsachse
- 156: Verfahrensschritt
- 158: Verfahrensschritt
- 160: Verfahrensschritt
- 162: Verfahrensschritt
- 164: Verfahrensschritt
- 166: Verfahrensschritt
- 168: Verfahrensschritt
- 170: Ausnehmung
- 172: Ausnehmung
- 174: Kulisse
- 176: Rollenachse
- 178: Antriebseinheit
- 180: Uhing-Mutter
- 182: Ausgangszustand

## Patentansprüche

1. Induktionsheizvorrichtung (10a-d) für ein Ein- und/oder Ausschrumpfen von Werkzeugen (12a-d) in und/oder aus Werkzeugaufnahmen (14a-d), insbesondere Induktionsheizeinheit (16a-d) einer Ein- und/oder Ausschrumpfspannstation (18a-d) für Werkzeuge (12a-d), mit einer zumindest eine Induktionsspule (20a-d) umfassenden Induktionsheizeinheit (16a-d), welche dazu vorgesehen ist, zumindest einen Teil der Werkzeugaufnahme (14a-d) bei einem Ein- und/oder Ausschrumpfvorgang durch ein Erhitzen aufzuweiten und mit zumindest einer Abschirmeinheit (22a-d), welche zumindest dazu vorgesehen ist, ein durch die Induktionsheizeinheit (16a-d) erzeugtes Induktionsmagnetfeld zumindest im Wesentlichen zumindest in einer Axialrichtung (24a-d) der Induktionsspule (20a-d) abzuschirmen, wobei die Induktionsheizeinheit (16a-d) und die Abschirmeinheit (22a-d) betriebsmäßig voneinander entkoppelbare und somit zumindest entlang der Axialrichtung (24a-d) relativ zueinander bewegbare Baueinheiten ausbilden, **dadurch gekennzeichnet, dass** die Abschirmeinheit (22a-d) zugleich eine Werkzeuggreifereinheit (26a-d) ausbildet, welche dazu vorgesehen ist, ein Werkzeug (12a-d) in die Werkzeugaufnahme (14a-d) einzusetzen und/oder aus der Werkzeugaufnahme (14a-d) zu entnehmen.

2. Induktionsheizvorrichtung (10a-d) nach Anspruch 1, **dadurch gekennzeichnet, dass** die Abschirmeinheit (22a-d) eine Anordnung von beweglich gelagerten Abschirmelementen (28a-d) umfasst.

3. Induktionsheizvorrichtung (10a-d) nach Anspruch 2, **dadurch gekennzeichnet, dass** die beweglich gelagerten Abschirmelemente (28a-d) einen Werkzeuggreifer (30a-d) der Werkzeuggreifereinheit (26a-d) zumindest teilweise ausbilden.

4. Induktionsheizvorrichtung (10a-d) nach Anspruch 2 oder 3, **dadurch gekennzeichnet, dass** die beweglich gelagerten Abschirmelemente (28a-d) derart relativ zueinander verschiebbar sind, dass sie eine zumindest im Wesentlichen geschlossene Abschirmebene mit einer variablen Öffnung (32a-d) zur Aufnahme von Werkzeugen (12a-d), vorzugsweise mit verschiedenen Durchmessern, ausbilden.

5. Induktionsheizvorrichtung (10a-d) nach Anspruch 4, **dadurch gekennzeichnet, dass** die beweglich gelagerten Abschirmelemente (28a-d) Lamellen (34a) eines Lamellenverschlusses (36a) oder zumindest senkrecht zur Axialrichtung (24a-d) verschiebbare Schieberelemente (38a-d) ausbilden.

6. Induktionsheizvorrichtung (10a-d) nach einem der Ansprüche 2 bis 5, **dadurch gekennzeichnet, dass** die Abschirmelemente (28a-d) zumindest zu einem Großteil aus einem weichmagnetischen, elektrisch im Wesentlichen nichtleitenden Material, beispielsweise aus weichmagnetischem Ferrit, ausgebildet sind.

7. Verfahren mit einer Induktionsheizvorrichtung (10a-d) zumindest nach Anspruch 1, **dadurch gekennzeichnet, dass** in einem Betriebszustand, in dem die Induktionsheizeinheit (16a-d) auf die Werkzeugaufnahme (14a-d) aufgesetzt ist, das in die Werkzeugaufnahme (14a-d) eingesetzte Werkzeug (12a-d) von der Werkzeuggreifereinheit (26a-d) in einem Nahbereich einer Werkzeugaufnahmeöffnung (40a-d) der Werkzeugaufnahme (14a-d) gegriffen wird oder **dadurch gekennzeichnet, dass** die beweglich gelagerten Abschirmelemente (28a-d) der Abschirmeinheit (22a-d) dazu verwendet werden, ein Werkzeug (12a-d) zu greifen.

8. Ein- und/oder Ausschrumpfspannstation (18a-d) für Werkzeuge (12a-d) zu einem zumindest zu einem Großteil automatisierten Ein- und/oder Ausschrumpfen von Werkzeugen (12a-d) in und/oder aus Werkzeugaufnahmen (14a-d), mit einer Induktionsheizvorrichtung (10a-d) nach einem der Ansprüche 1 bis 6, mit einer Werkzeuggreifereinheit (26a-d), welche dazu vorgesehen ist, ein Werkzeug (12a-d) zur Durchführung eines Einschrumpfvorgangs in eine Werkzeugaufnahme (14a-d) einzusetzen und/oder ein Werkzeug (12a-d) zu einer Durchführung eines Ausschrumpfvorgangs aus einer Werkzeugaufnahme (14a-d) zu entnehmen und mit einer Haltevorrichtung (42a-d) für eine Werkzeugaufnahme (14a-d), **dadurch gekennzeichnet, dass** die Werkzeuggreifereinheit (26a-d) ausschließlich entlang einer gemeinsamen Axialrichtung (24a-d) der Werkzeuggreifereinheit (26a-d) und der Haltevorrichtung (42a-d) bewegbar ist, so dass eine relative Positionierung der Werkzeuggreifereinheit (26a-d) und der Haltevorrichtung (42a-d) zueinander, abgesehen von der relativen Positionierung entlang der Axialrichtung (24a-d), während des gesamten Einschrumpfvorgangs und/oder während des gesamten Ausschrumpfvorgangs zumindest im Wesentlichen konstant ist.

9. Ein- und/oder Ausschrumpfspannstation (18a-d) nach Anspruch 8, **gekennzeichnet durch** eine Induktionsheizeinheit (16a-d), wobei eine relative Positionierung der Werkzeuggreifereinheit (26a-d) und der Induktionsheizeinheit (16a-d) zueinander, abgesehen von der relativen Positionierung entlang einer gemeinsamen Axialrichtung (24a-d) der Werkzeuggreifereinheit (26a-d) und der Induktionsheizeinheit (16a-d), während des gesamten Einschrumpfvorgangs und/oder während des gesamten Ausschrumpfvorgangs zumindest im Wesentlichen konstant ist.

10. Ein- und/oder Ausschrumpfspannstation (18a-d) nach Anspruch 8 oder 9, **gekennzeichnet durch** eine Antriebswelle (44a-d), welche dazu vorgesehen ist, zur voneinander unabhängigen Einstellung der axialen Positionen der Induktionsheizeinheit (16a-d) und der Werkzeuggreifereinheit (26a-d) mit der Induktionsheizeinheit (16a-d) und mit der Werkzeuggreifereinheit (26a-d) zu koppeln.

11. Ein- und/oder Ausschrumpfspannstation (18a-d) nach Anspruch 10, **dadurch gekennzeichnet, dass** die Induktionsheizeinheit (16a-d) und die Werkzeuggreifereinheit (26a-d) jeweils über ein Rollringgetriebe (46a-d, 92a-d) mit der Antriebswelle (44a-d) koppelbar sind.

12. Ein- und/oder Ausschrumpfspannstation (18a-d) zumindest nach Anspruch 9, **dadurch gekennzeichnet, dass** die Abschirmeinheit (22a-d) und die Werkzeuggreifereinheit (26a-d) zumindest teilweise einstückig miteinander ausgebildet sind.

13. Ein- und/oder Ausschrumpfspannstation (18a-d) nach einem der Ansprüche 8 bis 12, **gekennzeichnet durch** eine Längeneinstelleinheit (48a-d), welche dazu vorgesehen ist, ein Werkzeug (12a-d) während des Einschrumpfvorgangs auf Länge einzustellen.

14. Ein- und/oder Ausschrumpfspannstation (18a-d) nach Anspruch 13, **dadurch gekennzeichnet, dass** die Längeneinstelleinheit (48a-d) zumindest eine, insbesondere optische und/oder taktile, Sensoreinheit (50a-d) aufweist, welche entlang einer Axialbewegungsrichtung (52a-d) der Werkzeuggreifereinheit (26a-d) angeordnet ist und welche zu einer Bestimmung einer Referenzlänge eines einzuschrumpfenden Werkzeugs (12a-d) vorgesehen ist.

15. Ein- und/oder Ausschrumpfspannstation (18a-d) nach Anspruch 13 oder 14, **dadurch gekennzeichnet, dass** die Längeneinstelleinheit (48a-d) eine weitere, insbesondere optische, Sensoreinheit (54a-d) aufweist, welche in einem betriebsbereiten Zustand fest mit der Induktionsheizeinheit (16a-d) gekoppelt ist.

16. Verfahren mit einer Ein- und/oder Ausschrumpfspannstation (18a-d) nach einem der Ansprüche 8 bis 15, aufweisend zumindest eine Induktionsheizeinheit (16a-d), eine Haltevorrichtung (42a-d) für Werkzeugaufnahmen (14a-d) und eine Werkzeuggreifereinheit (26a-d), **dadurch gekennzeichnet, dass** die Werkzeuggreifereinheit (26a-d) während eines gesamten Einschrumpfvorgangs und/oder während eines gesamten Ausschrumpfvorgangs ausschließlich entlang einer einzelnen Achse, insbesondere ausschließlich entlang einer vorgesehenen Rotationsachse (154a-d) des ein- und/oder auszuschrumpfenden Werkzeugs (12a-d), verfahren wird.

17. Verfahren zu einem Einschrumpfen eines Werkzeugs (12a-d) in eine Werkzeugaufnahme (14-d) mittels einer Ein- und/oder Ausschrumpfspannstation (18a-d) nach einem der Ansprüche 8 bis 15, **dadurch gekennzeichnet, dass** in zumindest einem Längeneinstellschritt (66a-d) zu einer Ermittlung einer vorgesehenen Einschrumpf- und/oder Spanntiefe des Werkzeugs (12a-d), das Werkzeug (12a-d) auf die noch unaufgeweitete Werkzeugaufnahme (14a-d) aufgestellt wird und im Anschluss das Werkzeug (12a-d) entlang der Axialrichtung (24a-d) bewegt wird, bis eine Spitze (70a-d) des Werkzeugs (12a-d) von einer, insbesondere optischen oder taktilen, Sensoreinheit (50a-d) erfasst wird.

18. Verfahren zu einem Ausschrumpfen eines Werkzeugs (12a-d) aus einer Werkzeugaufnahme (14a-d) mittels einer Ein- und/oder Ausschrumpfspannstation (18a-d) nach einem der Ansprüche 8 bis 15, **dadurch gekennzeichnet, dass** in zumindest einem Werkzeugentnahmeschritt (72a-d) bereits während einer Aufheizphase eines Ausschrumpfvorgangs, in welchem eine Werkzeugaufnahme (14a-d) durch induktives Aufheizen aufgeweitet wird, mittels einer Werkzeuggreifereinheit (26a-d) der Ein- und/oder Ausschrumpfspannstation (18a-d) eine Entnahmezugkraft auf das Werkzeug (12a-d) ausgeübt wird.

## Claims

1. Induction heating device (10a-d) for a shrink-clamping and/or unshrink-unclamping of tools (12a-d) into and/or from tool holders (14a-d), in particular an induction heating unit (16a-d) of a shrink-clamping and/or unshrink-unclamping station (18a-d) for tools (12a-d),
with an induction heating unit (16a-d) comprising at least one induction coil (20a-d), which is configured to expand, by heating, at least a portion of the tool holder (14a-d) during a shrink-clamping and/or unshrink-unclamping process, and
with at least one shielding unit (22a-d), which is at least configured for a shielding of an induction magnetic field generated by the induction heating unit (16a-d) at least substantially at least in an axial direction (24a-d) of the induction coil (20a-d),
wherein the induction heating unit (16a-d) and the shielding unit (22a-d) form structural units which can be operatively decoupled from each other and can thus be moved relative to one another at least along the axial direction (24a-d),
**characterized in that** the shielding unit (22a-d) at the same time forms a tool gripper unit (26a-d), which is configured to insert a tool (12a-d) into the tool holder (14a-d) and/or to remove a tool (12a-d) from the tool holder (14a-d).

2. Induction heating device (10a-d) according to claim 1,
**characterized in that** the shielding unit (22a-d) comprises an arrangement of movably supported shielding elements (28a-d).

3. Induction heating device (10a-d) according to claim 2,
**characterized in that** the movably supported shielding elements (28a-d) at least partially form a tool gripper (30a-d) of the tool gripper unit (26a-d).

4. Induction heating device (10a-d) according to claim 2 or 3,
**characterized in that** the movably supported shielding elements (28a-d) are displaceable relative to one another in such a way that they form an at least substantially closed shielding plane with a variable opening (32a-d) for receiving tools (12a-d), preferably with different diameters.

5. Induction heating device (10a-d) according to claim 4,
**characterized in that** the movably supported shielding elements (28a-d) form blades (34a) of a bladed shutter (36a) or slide elements (38a-d) which are displaceable at least perpendicularly to the axial direction (24a-d).

6. Induction heating device (10a-d) according to one of claims 2 to 5,
**characterized in that** the shielding elements (28a-d) are implemented at least largely from a soft magnetic, essentially electrically non-conductive material, for example from soft magnetic ferrite.

7. Method with an induction heating device (10a-d) at least according to claim 1,
**characterized in that,** in an operating state in which the induction heating unit (16a-d) is placed on the tool holder (14a-d), the tool (12a-d) inserted in the tool holder (14a-d) is gripped by the tool gripper unit (26a-d) in a proximity of a tool holder opening (40a-d) of the tool holder (14a-d), or **characterized in that** the movably supported shielding elements (28a-d) of the shielding unit (22a-d) are used to grip a tool (12a-d).

8. Shrink-clamping and/or unshrink-unclamping station (18a-d) for tools (12a-d), for an at least largely automated shrink-clamping and/or unshrink-unclamping of tools (12a-d) into and/or from tool holders (14a-d),
with an induction heating device (10a-d) according to one of claims 1 to 6, with a tool gripper unit (26a-d) which is configured to insert a tool (12a-d) into a tool holder (14a-d) for the purpose of performing a shrink-clamping process and/or to remove a tool (12a-d) from a tool holder (14a-d) for the purpose of performing an unshrink-unclamping process, and with a holding device (42a-d) for a tool holder (14a-d),
**characterized in that** the tool gripper unit (26a-d) can be moved exclusively along a common axial direction (24a-d) of the tool gripper unit (26a-d) and the holding device (42a-d), such that
a relative positioning of the tool gripper unit (26a-d) and the holding device (42a-d) relative to one another, apart from the relative positioning along the axial direction (24a-d), is at least substantially constant during the whole shrink-clamping process and/or during the whole unshrink-unclamping process.

9. Shrink-clamping and/or unshrink-unclamping station (18a-d) according to claim 8,
**characterized by** an induction heating unit (16a-d), wherein a relative positioning of the tool gripper unit (26a-d) and the induction heating unit (16a-d) relative to one another, apart from the relative positioning along a common axial direction (24a-d) of the tool gripper unit (26a-d) and the induction heating unit (16a-d), is at least substantially constant during the whole shrink-clamping process and/or during the whole unshrink-unclamping process.

10. Shrink-clamping and/or unshrink-unclamping station (18a-d) according to claim 8 or 9,
**characterized by** a driveshaft (44a-d), which is configured to couple with the induction heating unit (16a-d) and with the tool gripper unit (26a-d) for the purpose of a mutually independent adjustment of the axial positions of the induction heating unit (16a-d) and of the tool gripper unit (26a-d).

11. Shrink-clamping and/or unshrink-unclamping clamping station (18a-d) according to claim 10,
**characterized in that** the induction heating unit (16a-d) and the tool gripper unit (26a-d) can respectively be coupled with the driveshaft (44a-d) via a rolling ring drive (46a-d, 92a-d).

12. Shrink-clamping and/or unshrink-unclamping station (18a-d) at least according to claim 9,
**characterized in that** the shielding unit (22a-d) and the tool gripper unit (26a-d) are implemented at least partially integrally with each other.

13. Shrink-clamping and/or unshrink-unclamping station (18a-d) according to one of claims 8 to 12,
**characterized by** a length-adjustment unit (48a-d), which is configured to adjust a length of a tool (12a-d) during the shrink-clamping process.

14. Shrink-clamping and/or unshrink-unclamping station (18a-d) according to claim 13,
**characterized in that** the length-adjustment unit (48a-d) has at least one, in particular optical and/or tactile, sensor unit (50a-d), which is arranged along an axial movement direction (52a-d) of the tool gripper unit (26a-d), and which is configured for a determination of a reference length of a tool (12a-d) that is to be shrink-clamped.

15. Shrink-clamping and/or unshrink-unclamping station (18a-d) according to claim 13 or 14,
**characterized in that** the length-adjustment unit (48a-d) has a further, in particular optical, sensor unit (54a-d), which is fixedly coupled with the induction heating unit (16a-d) in a ready-to-operate state.

16. Method with a shrink-clamping and/or unshrink-unclamping station (18a-d) according to one of claims 8 to 15,
comprising at least one induction heating unit (16a-d), a holding device (42a-d) for tool holders (14a-d) and a tool gripper unit (26a-d),
**characterized in that** the tool gripper unit (26a-d) is traversed exclusively along a single axis, in particular exclusively along a designated axis of rotation (154a-d), of the tool (12a-d) that is to be shrink-clamped and/or unshrink-unclamped, during a whole shrink-clamping process and/or during a whole unshrink-unclamping process.

17. Method for shrink-clamping a tool (12a-d) into a tool holder (14a-d) by means of a shrink-clamping and/or unshrink-unclamping station (18a-d) according to one of claims 8 to 15,
**characterized in that,** in at least one length adjustment step (66a-d), for a determination of a designated shrink-on depth and/or clamping depth of the tool (12a-d), the tool (12a-d) is placed on the still unexpanded tool holder (14a-d), and the tool (12a-d) is subsequently moved along the axial direction (24a-d) until a tip (70a-d) of the tool (12a-d) is captured by an, in particular optical or tactile, sensor unit (50a-d).

18. Method for an unshrink-unclamping of a tool (12a-d) from a tool holder (14a-d) by means of a shrink-clamping and/or unshrink-unclamping station (18a-d) according to one of claims 8 to 15,
**characterized in that** in at least one tool removal step (72a-d), as early as during a heating-up phase of an unshrink-unclamping process in which a tool holder (14a-d) is expanded by inductive heating, a pulling removal force is exerted onto the tool (12a-d) by means of a tool gripper unit (26a-d) of the shrink-clamping and/or unshrink-unclamping station (18a-d).

## Revendications

1. Dispositif de chauffage par induction (10a-d) pour un serrage et/ou desserrage par rétrécissement d'outils (12a-d) dans et/ou hors de logements d'outil (14a-d), en particulier unité de chauffage par induction (16a-d) d'une station de serrage et/ou desserrage par rétrécissement (18a-d) pour des outils (12a-d),
avec une unité de chauffage par induction (16a-d) comprenant au moins une bobine d'induction (20a-d) et conçue pour élargir au moins une partie du logement d'outil (14a-d) moyennant chauffage lors d'un procès de serrage et/ou desserrage par rétrécissement, et
avec au moins une unité de blindage (22a-d) qui est conçue au moins pour blinder un champ magnétique d'induction généré par l'unité de chauffage par induction (16a-d) au moins sensiblement au moins dans une direction axiale (24a-d) de la bobine d'induction (20a-d),
où l'unité de chauffage par induction (16a-d) et l'unité de blindage (22a-d) forment des unités structurelles qui, en fonctionnement, peuvent être découplées l'une de l'autre et sont ainsi mobiles l'une par rapport à l'autre au moins le long de la direction axiale (24a-d),
**caractérisé en ce que** l'unité de blindage (22a-d) forme en même temps une unité préhenseur d'outil (26a-d) conçue pour insérer un outil (12a-d) dans le logement d'outil (14a-d) et/ou pour retirer un outil (12a-d) du logement d'outil (14a-d).

2. Dispositif de chauffage par induction (10a-d) selon la revendication 1, **caractérisé en ce que** l'unité de blindage (22a-d) comprend un agencement d'éléments de blindage (28a-d) qui sont supportés de manière mobile.

3. Dispositif de chauffage par induction (10a-d) selon la revendication 2, **caractérisé en ce que** les éléments de blindage (28a-d) qui sont supportés de manière mobile forment au moins partiellement un préhenseur d'outil (30a-d) de l'unité préhenseur d'outil (26a-d).

4. Dispositif de chauffage par induction (10a-d) selon la revendication 2 ou 3, **caractérisé en ce que** les éléments de blindage (28a-d) supportés de manière mobile sont déplaçables l'un par rapport à l'autre de telle sorte qu'ils forment un plan de blindage au moins sensiblement fermé avec une ouverture variable (32a-d) pour le logement d'outils (12a-d), de préférence ayant de diamètres différents.

5. Dispositif de chauffage par induction (10a-d) selon la revendication 4, **caractérisé en ce que** les éléments de blindage (28a-d) supportés de manière mobile forment des lamelles (34a) d'une fermeture à lamelles (36a) ou forment des éléments coulissants (38a-d) qui sont déplaçables au moins perpendiculairement à la direction axiale (24a-d).

6. Dispositif de chauffage par induction (10a-d) selon l'une des revendications 2 à 5,
**caractérisé en ce que** les éléments de blindage (28a-d) sont réalisés au moins en grande partie en un matériau magnétique doux, électriquement sensiblement non conducteur, par exemple en ferrite magnétique doux.

7. Procédé avec un dispositif de chauffage par induction (10a-d) au moins selon la revendication 1,
**caractérisé en ce que,** dans un état de fonctionnement dans lequel l'unité de chauffage par induction (16a-d) est placée sur le logement d'outil (14ad), l'outil (12a-d) inséré dans le logement d'outil (14a-d) est saisi par l'unité préhenseur d'outil (26a-d) dans une proximité d'une ouverture de logement d'outil (40a-d) du logement d'outil (14a-d),
ou **caractérisé en ce que** les éléments de blindage (28a-d) supportés de manière mobile de l'unité de blindage (22a-d) sont utilisés pour saisir un outil (12a-d).

8. Station de serrage et/ou desserrage par rétrécissement (18a-d) pour des outils (12a-d) pour un serrage et/ou desserrage par rétrécissement, au moins largement automatisé, d'outils (12a-d) dans et/ou hors de logements d'outil (14a-d),
avec un dispositif de chauffage par induction (10a-d) selon l'une des revendications 1 à 6,
avec une unité préhenseur d'outil (26a-d) qui est conçue à insérer un outil (12a-d) dans un logement d'outil (14a-d) pour l'implémentation d'un procès de serrage par rétrécissement et/ou à retirer un outil (12a-d) d'un logement d'outil (14a-d) pour l'implémentation d'un procès de desserrage par rétrécissement, et
avec un dispositif de maintien (42a-d) pour un logement d'outil (14a-d), **caractérisée en ce que** l'unité préhenseur d'outil (26a-d) est mouvable exclusivement le long d'une direction axiale commune (24a-d) de l'unité préhenseur d'outil (26a-d) et du dispositif de maintien (42a-d), de sorte qu'un positionnement relatif de l'unité préhenseur d'outil (26a-d) et du dispositif de maintien (42a-d) l'un par rapport à l'autre, à l'exception du positionnement relatif le long de la direction axiale (24a-d), est au moins sensiblement constant pendant tout le procès de serrage par rétrécissement et/ou pendant tout le procès de desserrage par rétrécissement.

9. Station de serrage et/ou desserrage par rétrécissement (18a-d) selon la revendication 8,
**caractérisée par** une unité de chauffage par induction (16a-d), où un positionnement relatif de l'unité préhenseur d'outil (26a-d) et de l'unité de chauffage par induction (16a-d) l'une par rapport à l'autre, à l'exception du positionnement relatif le long d'une direction axiale commune (24a-d) de l'unité préhenseur d'outil (26a-d) et de l'unité de chauffage par induction (16a-d), est au moins sensiblement constant pendant tout le procès de serrage par rétrécissement et/ou pendant tout le procès de desserrage par rétrécissement.

10. Station de serrage et/ou desserrage par rétrécissement (18a-d) selon la revendication 8 ou 9,
**caractérisée par** un arbre d'entraînement (44a-d) conçu à être couplé avec l'unité de chauffage par induction (16a-d) et avec l'unité préhenseur d'outil (26a-d) pour le réglage, mutuellement indépendante, des positions axiales de l'unité de chauffage par induction (16a-d) et de l'unité préhenseur d'outil (26a-d).

11. Station de serrage et/ou desserrage par rétrécissement (18a-d) selon la revendication 10,
**caractérisée en ce que** l'unité de chauffage par induction (16a-d) et l'unité préhenseur d'outil (26a-d) peuvent être couplées à l'arbre d'entraînement (44a-d) respectivement par le biais d'un engrenage à bague à roulement (46a-d, 92a-d).

12. Station de serrage et/ou desserrage par rétrécissement (18a-d) au moins selon la revendication 9,
**caractérisée en ce que** l'unité de blindage (22a-d) et l'unité préhenseur d'outil (26a-d) sont réalisées au moins en partie intégralement l'une avec l'autre.

13. Station de serrage et/ou desserrage par rétrécissement (18a-d) selon l'une des revendications 8 à 12,
**caractérisée par** une unité réglage-longueur (48a-d) conçue pour régler en longueur un outil (12a-d) pendant le procès de serrage par rétrécissement.

14. Station de serrage et/ou desserrage par rétrécissement (18a-d) selon la revendication 13,
**caractérisée en ce que** l'unité réglage-longueur (48a-d) comprend au moins une unité captrice (50a-d), en particulier une unité captrice (50a-d) optique et/ou tactile, qui est disposée le long d'une direction de mouvement axial (52a-d) de l'unité préhenseur d'outil (26a-d) et qui est conçue pour la détermination d'une longueur de référence d'un outil (12ad) qui est à être serré par rétrécissement.

15. Station de serrage et/ou desserrage par rétrécissement (18a-d) selon la revendication 13 ou 14,
**caractérisée en ce que** l'unité réglage-longueur (48a-d) comprend une autre unité captrice (54a-d), en particulier une unité captrice (54a-d) optique, qui est couplée fixement avec l'unité de chauffage par induction (16a-d) dans un état prêt à fonctionner.

16. Procédé
avec une station de serrage et/ou desserrage par rétrécissement (18a-d) selon l'une des revendications 8 à 15, comprenant au moins une unité de chauffage par induction (16a-d), un dispositif de maintien (42a-d) pour des logements d'outil (14a-d) et une unité préhenseur d'outil (26a-d), **caractérisé en ce que** pendant tout un procès de serrage par rétrécissement et/ou pendant tout un procès de desserrage par rétrécissement, l'unité préhenseur d'outil (26a-d) est traversée exclusivement le long d'un axe seul, en particulier exclusivement le long d'un axe rotatif (154a-d) désigné, de l'outil (12a-d) qui est à être serré par rétrécissement et/ou desserré par rétrécissement.

17. Procédé pour un serrage par rétrécissement d'un outil (12a-d) dans un logement d'outil (14a-d) au moyen d'une station de serrage et/ou desserrage par rétrécissement (18a-d) selon l'une des revendications 8 à 15,
**caractérisé en ce que** dans au moins une étape de réglage-longueur (66a-d), pour la détermination d'une profondeur de rétrécissement et/ou de serrage de l'outil (12a-d), l'outil (12a-d) est placé sur le logement d'outil (14a-d) pas encore élargi, et ensuite l'outil (12a-d) est mu le long de la direction axiale (24a-d) jusqu'à ce qu'une pointe (70a-d) de l'outil (12a-d) soit détectée par une unité captrice (50a-d), en particulier une unité captrice (50a-d) optique ou tactile.

18. Procédé pour un desserrage par rétrécissement d'un outil (12a-d) hors d'un logement d'outil (14a-d) au moyen d'une station de serrage et/ou desserrage par rétrécissement (18a-d) selon l'une des revendications 8 à 15,
**caractérisé en ce que** déjà pendant une phase de chauffage d'un procès de desserrage par rétrécissement dans lequel un logement d'outil (14a-d) est élargi par chauffage inductif, dans au moins une étape de prélèvement d'outil (72a-d), une force de traction de prélèvement est exercée sur l'outil (12a-d) au moyen d'une unité préhenseur d'outil (26a-d) de la station de serrage et/ou desserrage par rétrécissement (18a-d).
